# EUROPEAN PATENT SPECIFICATION

(11) **EP 3 660 645 B1**
(45) Date of publication and mention of the grant of the patent: **24.12.2025**
(21) Application number: 17927180.4
(22) Date of filing: 30.09.2017
(51) Int. Cl.: G06F 3/0488, G06F 3/0481

(54) **METHOD AND DEVICE FOR MESSAGE PROCESSING**
VERFAHREN UND VORRICHTUNG ZUR NACHRICHTENVERARBEITUNG
PROCÉDÉ ET DISPOSITIF DE TRAITEMENT DE MESSAGE

(43) Date of publication of application: 03.06.2020
(73) Proprietor: Huawei Technologies Co., Ltd., Longgang District Shenzhen, Guangdong 518129 (CN)
(72) Inventor: MAO, Yanyan, Shenzhen Guangdong 518129 (CN); LIU, Mohan, Shenzhen Guangdong 518129 (CN)
(74) Representative: Gill Jennings & Every LLP
(86) International application number: PCT/CN2017/105001
(87) International publication number: WO 2019/061495

(56) References cited:
- WO-A1-2014/000255
- CN-A- 105 453 444
- CN-A- 105 898 014
- CN-A- 106 201 221
- CN-A- 107 018 237
- US-A1- 2011 119 258
- US-A1- 2015 312 199
- US-A1- 2015 312 199

## Description

### TECHNICAL FIELD

This application relates to the terminal field, and in particular, to a message processing method and an apparatus.

### BACKGROUND

Currently, more applications may be installed on a mobile phone. A user receives various information or notifications every day. When the user sees various notifications in a drop-down list, because there is a great amount of information, the user usually needs to spend some time and energy in distinguishing important information or notifications, wasting time and energy.

CN 107 018 237 A discloses an unread message processing method, terminal, and computer-readable recording medium.

### SUMMARY

Embodiments of this application provide a message processing method and an apparatus, to display a non-unimportant unread message instead of an unimportant unread message on a particular user interface when a preset operation is received.

A first aspect of the embodiments of this application provides a message processing method, including: performing, by a user, a first operation on a terminal, where the first operation performed by the user on the terminal may be turning on a screen, performing tap to open a first user interface, or performing another operation so that the terminal displays a first user interface, and this is not limited herein; and the first user interface is a drop-down message notification bar; and in response to the first operation, and displaying, by the terminal, a first unread message and a second unread message on the first user interface. The terminal may receive a plurality of messages. The first unread message and the second unread message are used as an example for description.

After the first user interface is exited, the user performs a second operation on the terminal. Similarly, the second operation may also be turning on the screen, performing tap to open a second user interface, or performing another operation so that the terminal displays a second user interface, and this is not limited herein; and the second user interface is a drop-down message notification bar. If the first unread message and the second unread message are not read or deleted by the user through tapping and are still unread messages, the first unread message is a non-unimportant unread message, and the second unread message is an unimportant unread message, the terminal displays the first unread message instead of the second unread message on the second user interface.

Alternatively, when the first user interface is not exited, in response to a second operation performed by the user on the terminal, if the first unread message and the second unread message are still unread messages, the terminal stops displaying the second unread message, and maintains displaying of the first unread message on the first user interface of the terminal. The first unread message is a non-unimportant unread message, and the second unread message is an unimportant unread message.

Specifically, the second operation is at least one of: shaking the terminal by a preset amplitude, for a preset quantity of times, or for preset duration; tapping a preset virtual button on the terminal; or sending preset audio information to the terminal.

In the technical solution provided in this embodiment of this application, after the first operation and the second operation, the terminal may not display a displayed unimportant unread message on the second user interface. Therefore, even if when there are a large quantity of unread messages, in order neither to miss non-unimportant unread messages nor to be interfered by unimportant unread messages, the terminal can automatically identify unimportant unread messages, and the user does not need to identify or delete the unimportant unread messages one by one. This saves time and energy, and ensures great convenience and good user experience.

The method further includes: determining, based on at least one of: a source function of the first unread message, a source application of the first unread message, that the first unread message is the non-unimportant unread message; and/or determining, based on at least one of: a source function of the second unread message, a source application of the second unread message, that the second unread message is the unimportant unread message. **In** this case, when there are a large quantity of unread messages, the terminal can automatically identify unimportant unread messages, and the user does not need to determine the messages one by one. This saves time and energy, and ensures great convenience and good user experience.

**In** the embodiments, after the first user interface is exited, and before the response to a second operation performed by the user on the terminal, the method further includes: determining that the second operation occurs after preset duration that elapses after the first user interface is exited. **In** this case, the user can consider and determine, within the preset duration, whether to read an unimportant unread message.

A second aspect of the embodiments of this application provides a message processing apparatus. The apparatus includes a receiving module and a display module.

The receiving module is configured to receive a first operation performed by a user on the apparatus. The display module displays a first unread message and a second unread message on a first user interface of the apparatus based on the first operation.

The first user interface is a drop-down message notification bar. After the first user interface is exited, the receiving module receives a second operation performed by the user on the apparatus, so that if the first unread message and the second unread message are still unread messages, the display module displays the first unread message instead of the second unread message on the second user interface. The first unread message is a non-unimportant unread message, and the second unread message is an unimportant unread message. The second user interface is a drop-down message notification bar.

If the first user interface is not exited, when the receiving module receives a second operation performed by the user on the apparatus, if the first unread message and the second unread message are still unread messages, the display module stops displaying the second unread message, and maintains displaying of the first unread message, on the first user interface. The first unread message is a non-unimportant unread message, and the second unread message is an unimportant unread message.

The second operation may be at least one of: shaking the apparatus by a preset amplitude, for a preset quantity of times, or for preset duration; tapping a preset virtual button on the apparatus; or sending preset audio information to the apparatus.

In the technical solution provided in this embodiment of this application, after the first operation and the second operation, the apparatus may not display a displayed unimportant unread message on the second user interface. Therefore, even if when there are a large quantity of unread messages, in order neither to miss non-unimportant unread messages nor to be interfered by unimportant unread messages, the apparatus can automatically identify unimportant unread messages, and the user does not need to identify or delete the unimportant unread messages one by one. This saves time and energy, and ensures great convenience and good user experience.

The apparatus further includes a determining module. The determining module is configured to determine, based on at least one of: a source function of the first unread message, a source application of the first unread message, that the first unread message is the non-unimportant unread message; and determine, based on at least one of: a source function of the second unread message, a source application of second unread message, that the second unread message is the unimportant unread message. When there are a large quantity of unread messages, the apparatus can automatically identify unimportant unread messages, and the user does not need to determine the messages one by one. This saves time and energy, and ensures great convenience and good user experience.

**In** the embodiments, the determining module further determines that the second operation occurs after preset duration that elapses after the first user interface is exited, so that the user can consider and determine, within the preset duration, whether to read an unimportant unread message.

A fourth aspect of the embodiments of this application provides a computer program product. When the computer program product is run on a verification device, the verification device is enabled to perform the method in the foregoing aspects.

A fifth aspect of the embodiments of this application provides a computer readable storage medium, including an instruction. When the instruction is run on a verification device, the verification device is enabled to perform the method in the foregoing aspects.

**In** the technical solutions provided in the embodiments of this application, after the first operation and the second operation, the terminal or the apparatus may not display a displayed unimportant unread message on the second user interface. Therefore, even if when there are a large quantity of unread messages, in order neither to miss non-unimportant unread messages nor to be interfered by unimportant unread messages, the terminal or the apparatus can automatically identify unimportant unread messages, and the user does not need to identify or delete the unimportant unread messages one by one. This saves time and energy, and ensures great convenience and good user experience.

### BRIEF DESCRIPTION OF DRAWINGS

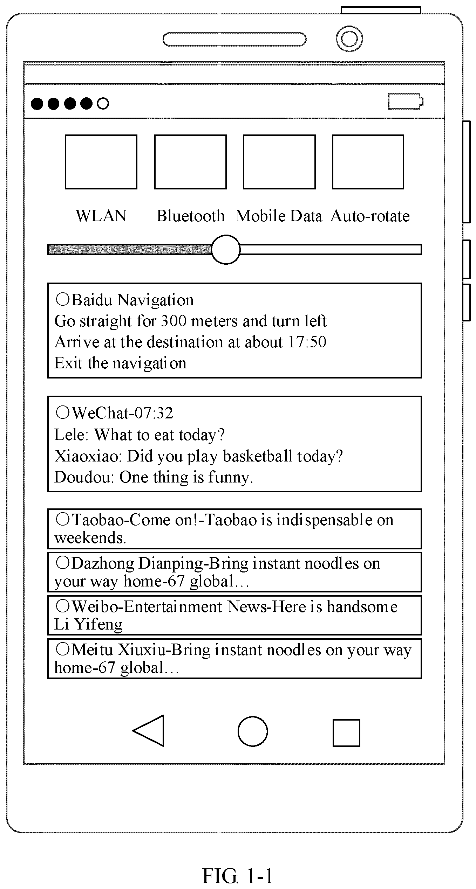

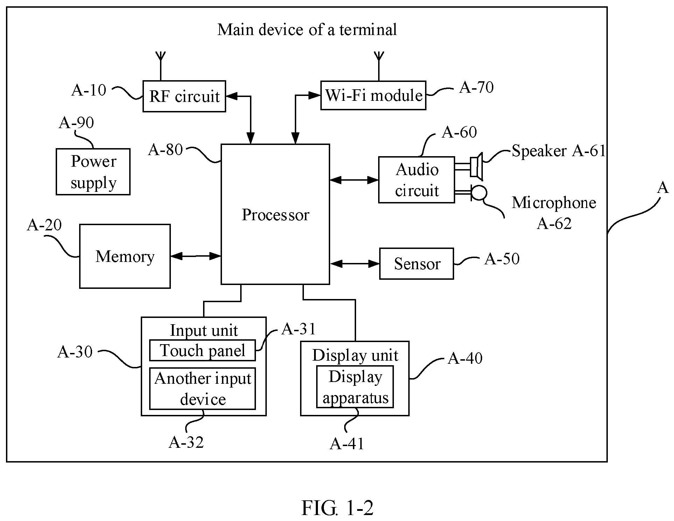

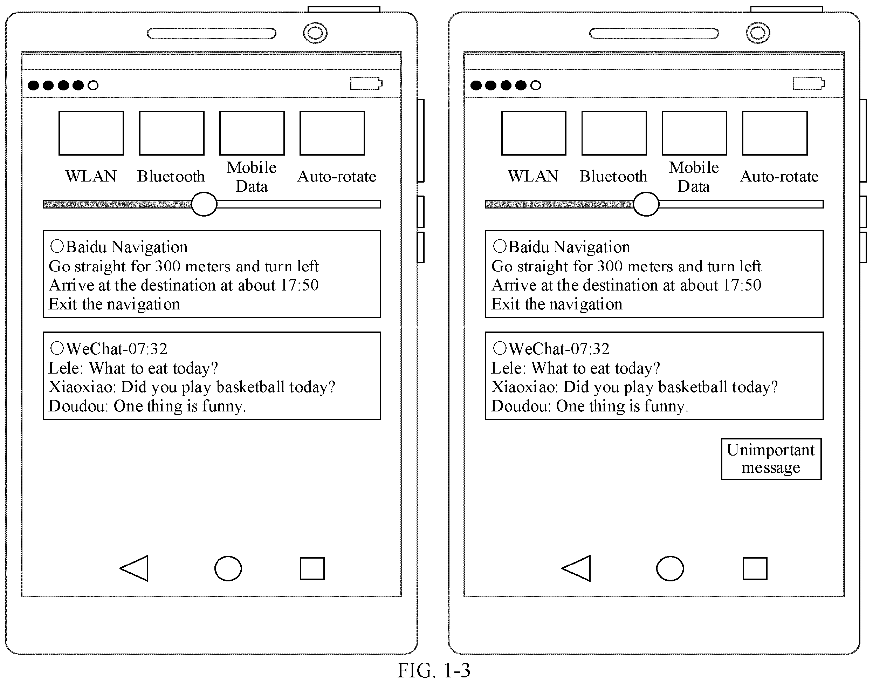

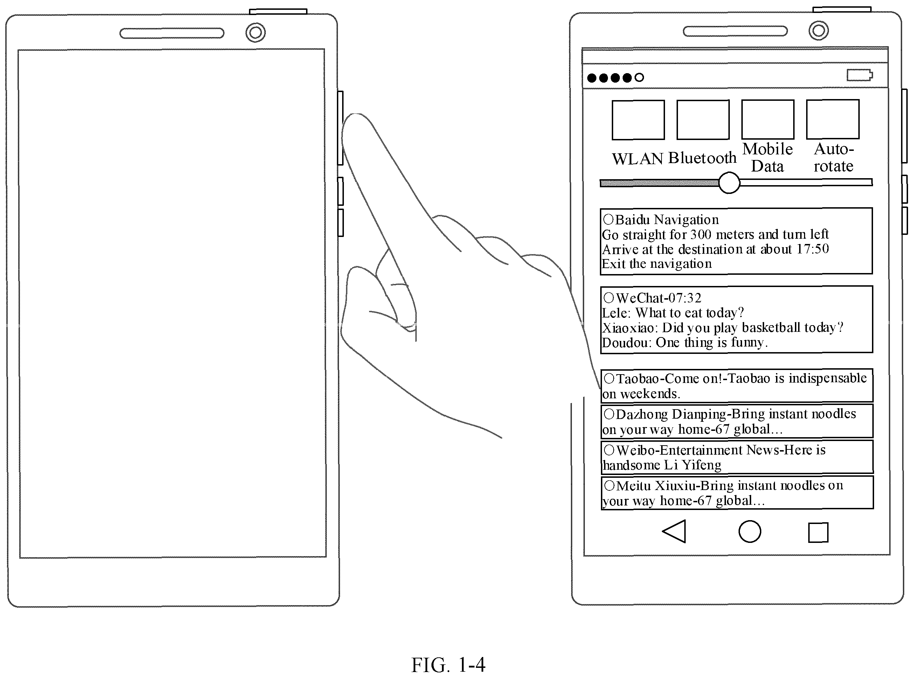

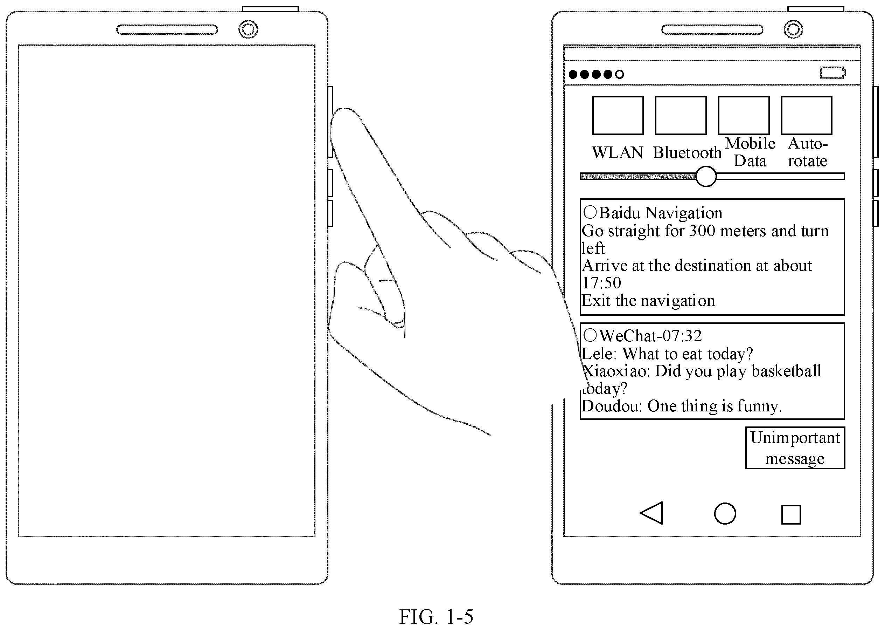

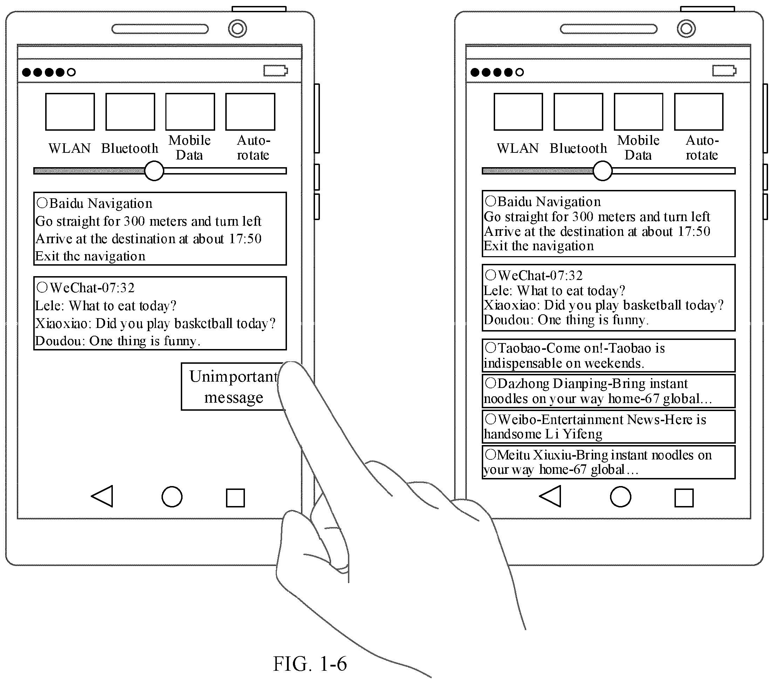

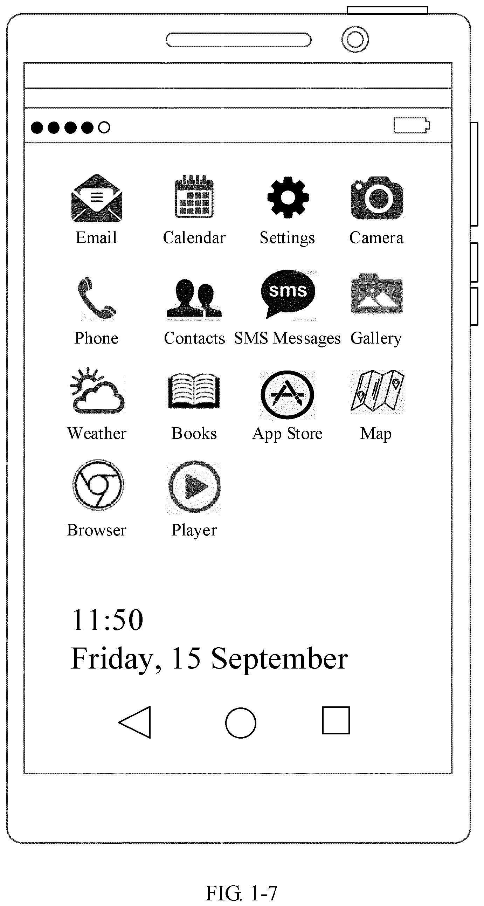

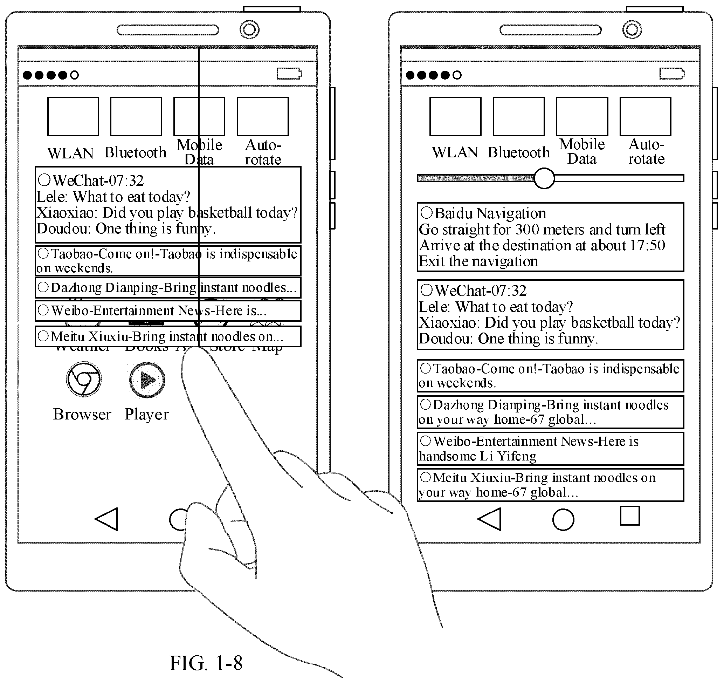

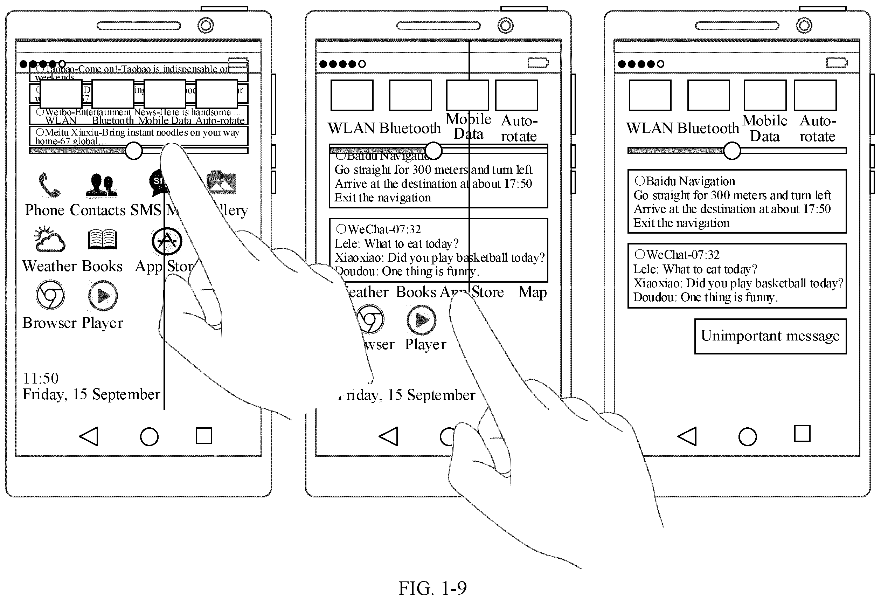

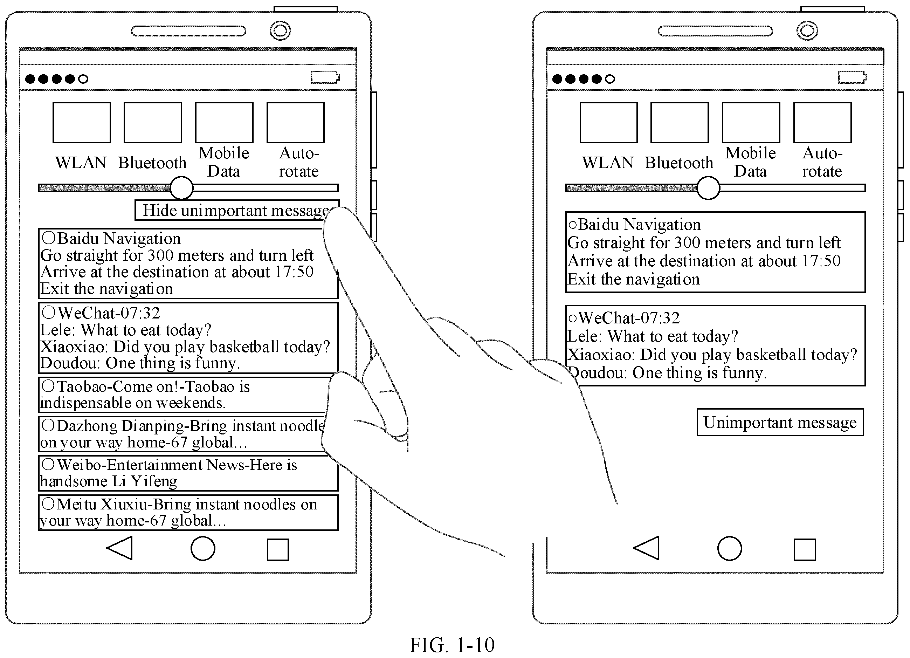

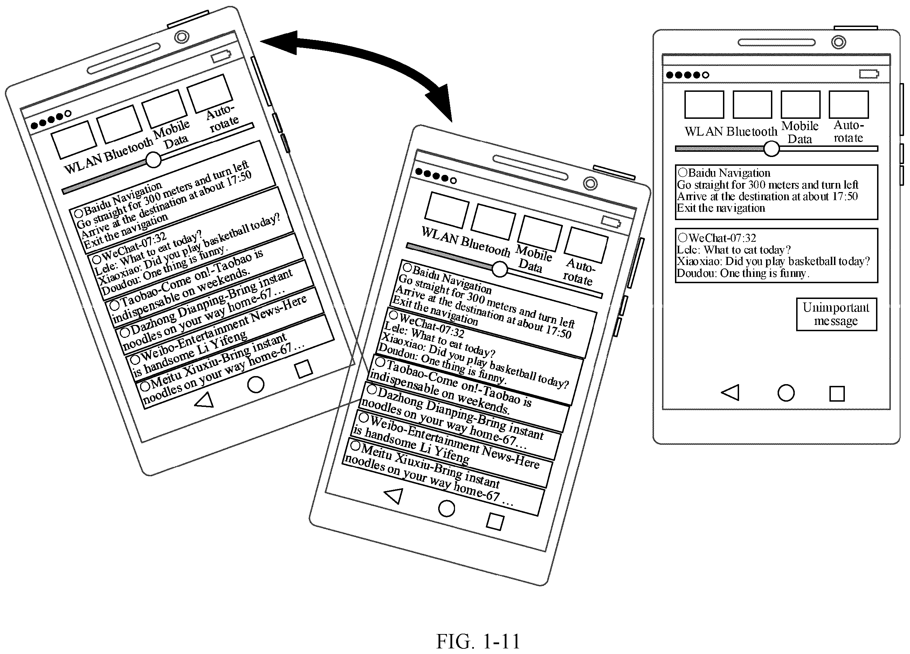

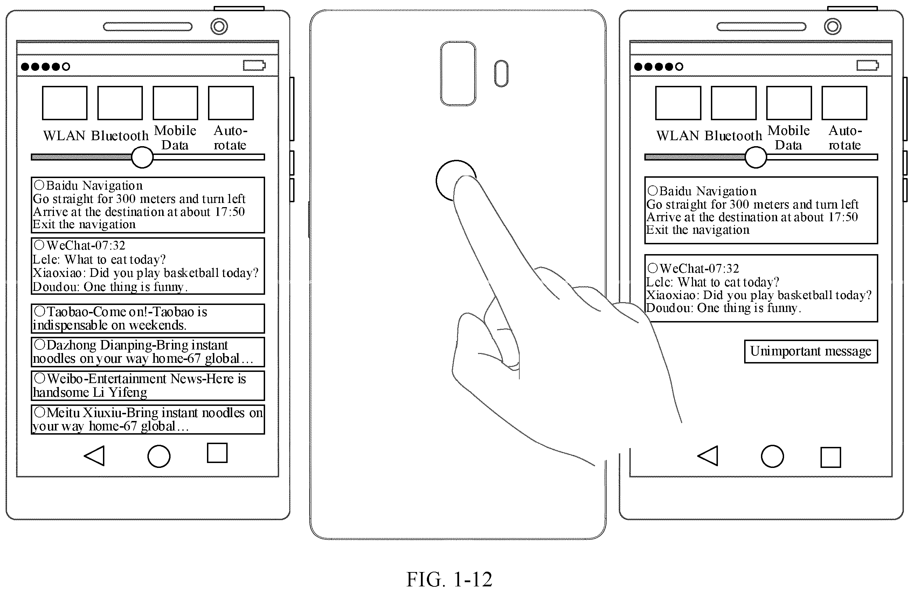

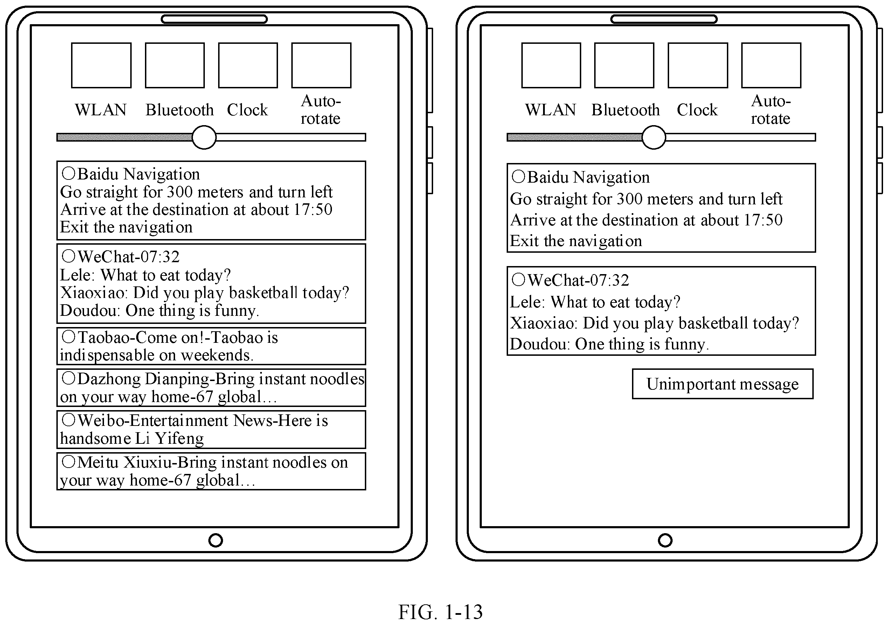

FIG. 1-1 is a schematic diagram of a drop-down message notification bar of an intelligent terminal;
FIG. 1-2 is a schematic diagram of a terminal according to this application;
FIG. 1-3 is a schematic diagram of a drop-down message notification bar with only an important message retained;
FIG. 1-4 is a schematic diagram of tapping a power button by a user to enter a drop-down message notification bar;
FIG. 1-5 is a schematic diagram of tapping a power button by a user to enter a drop-down message notification bar again;
FIG. 1-6 is a schematic diagram of tapping a dialog box "Unimportant unread message" by a user to display an unimportant message;
FIG. 1-7 is a schematic diagram showing that a mobile phone is in a screen-on state;
FIG. 1-8 is a schematic diagram of performing downward pulling by a user from a top of a screen to obtain a drop-down message notification bar;
FIG. 1-9 is a schematic diagram of closing and opening a drop-down message notification bar by a user;
FIG. 1-10 is a schematic diagram of tapping a dialog box to remove an unimportant message;
FIG. 1-11 is a schematic diagram of shaking a mobile phone to remove an unimportant message;
FIG. 1-12 is a schematic diagram of tapping a fingerprint button to remove an unimportant message;
FIG. 1-13 is a schematic diagram of displaying a drop-down message notification bar on a tablet computer;
FIG. 2-1 is a schematic diagram of a message processing method;
FIG. 2-2 is another schematic diagram of a message processing method;

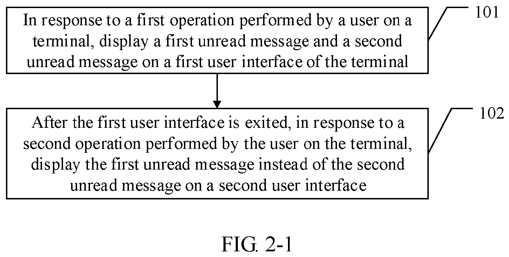

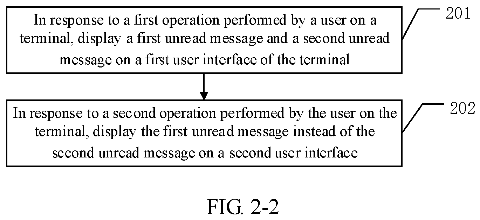

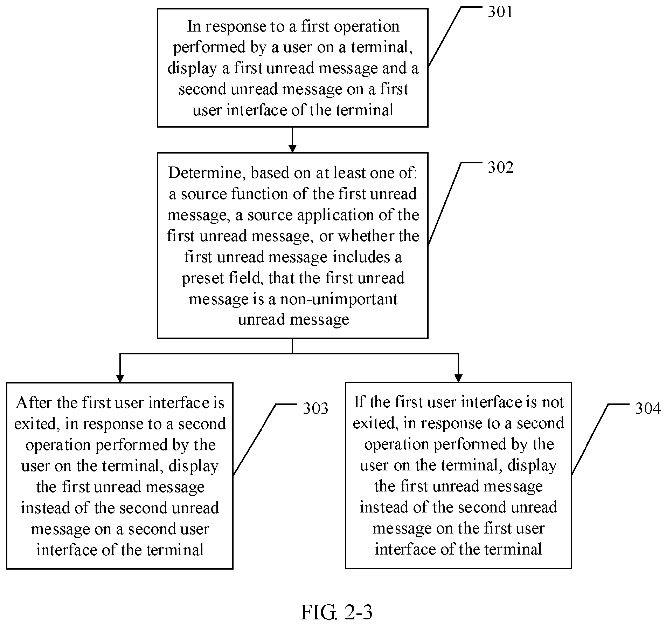

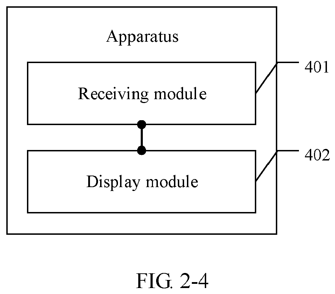

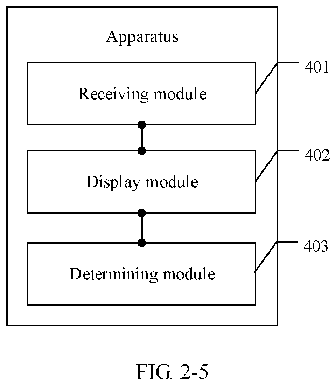

FIG. 2-3 is another schematic diagram of a message processing method;
FIG. 2-4 is a schematic diagram of an apparatus;
FIG. 2-5 is another schematic diagram of an apparatus;

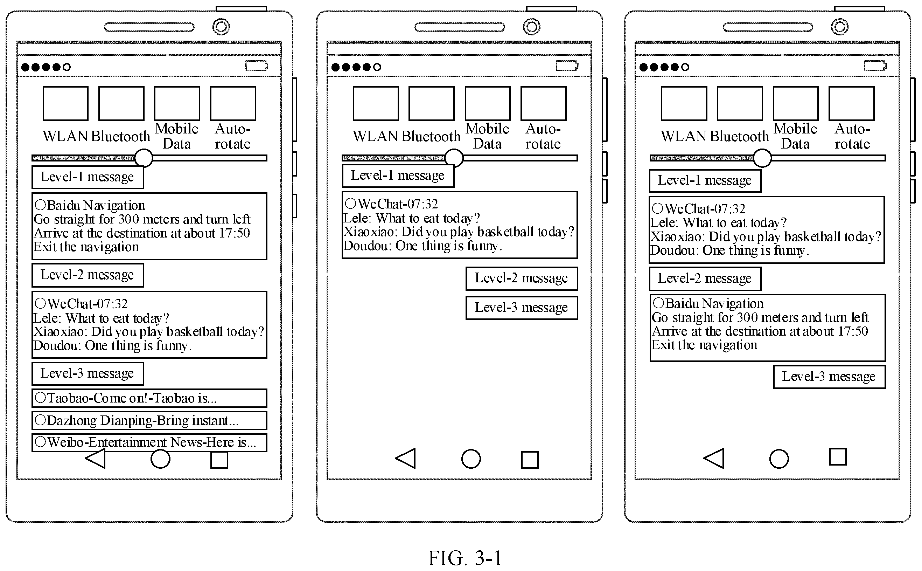

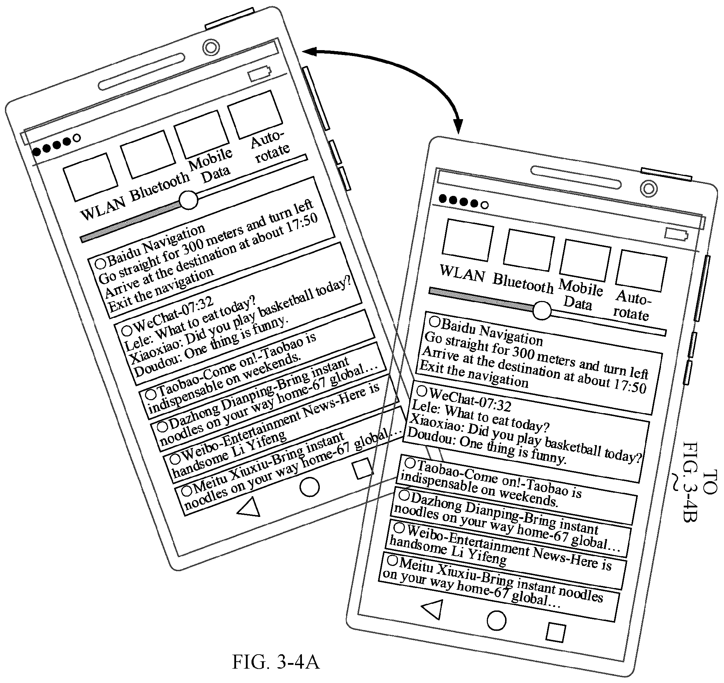

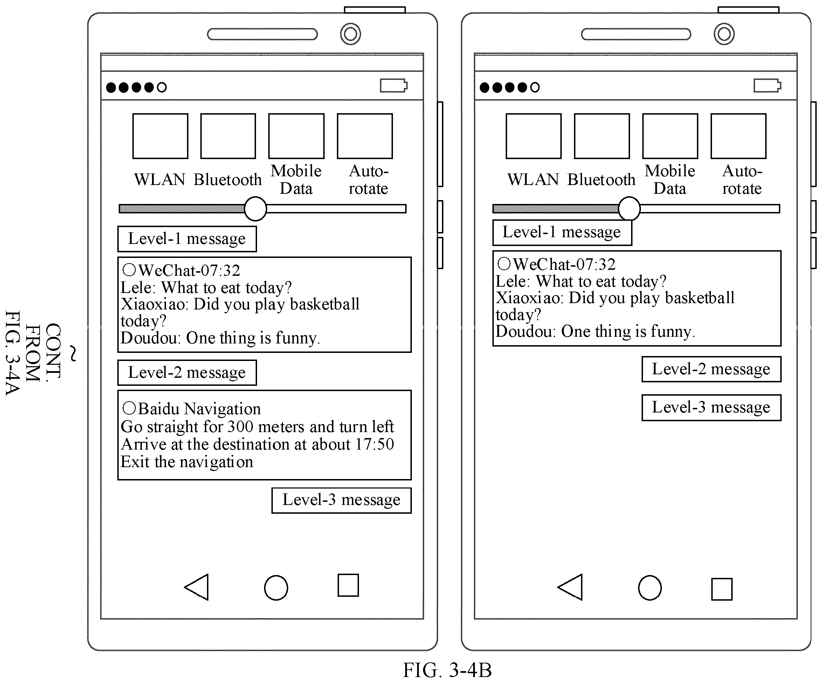

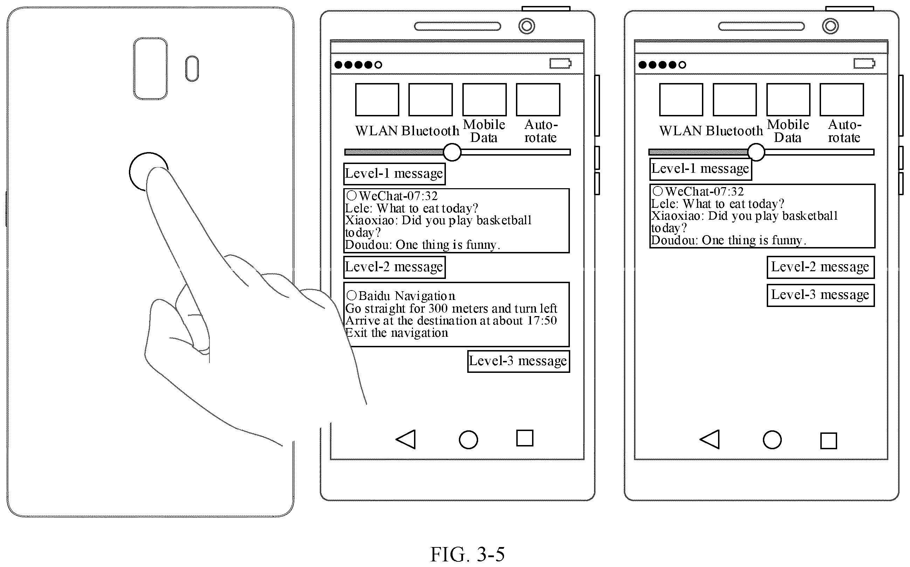

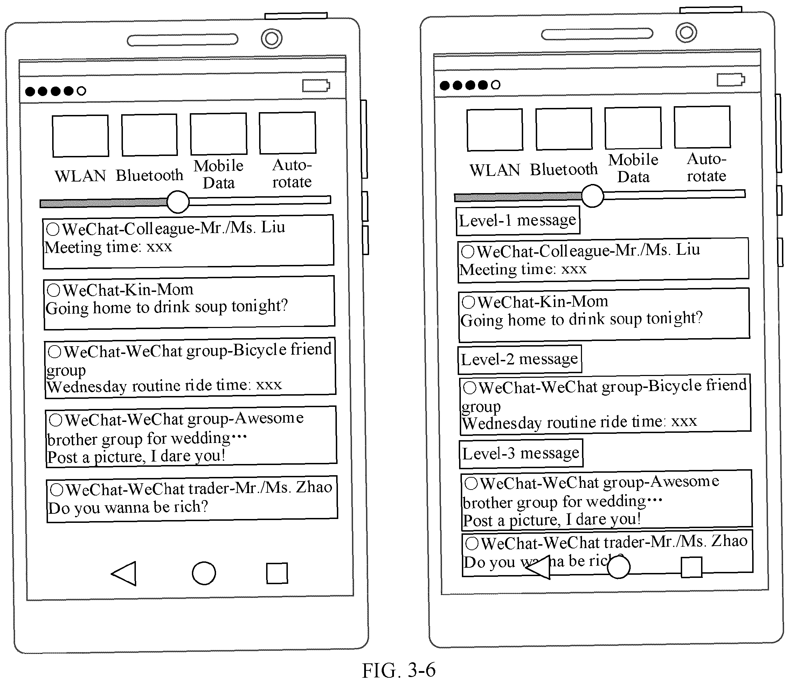

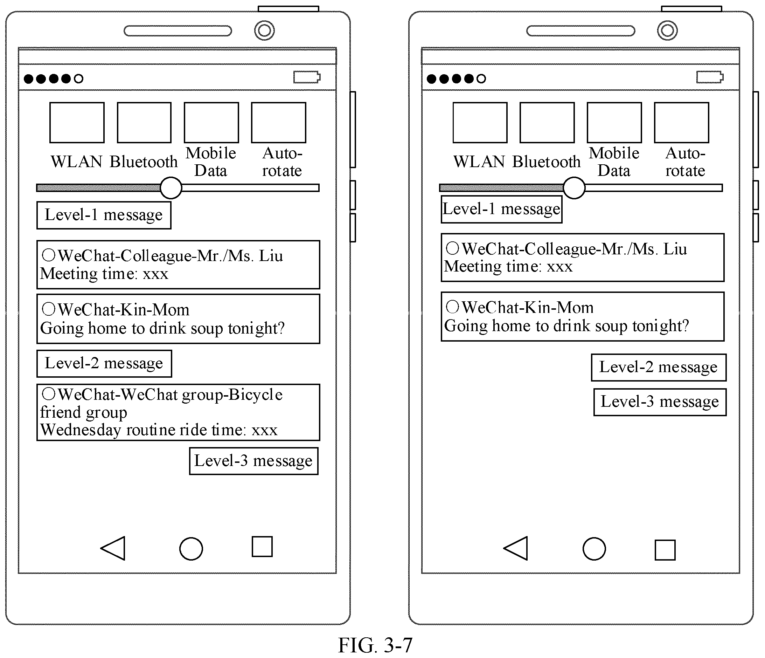

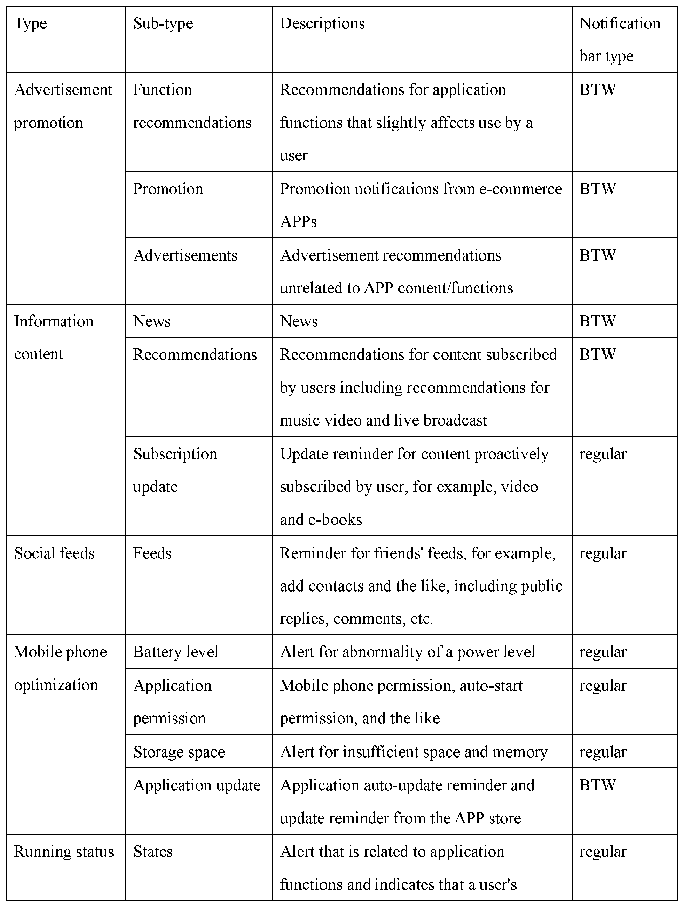

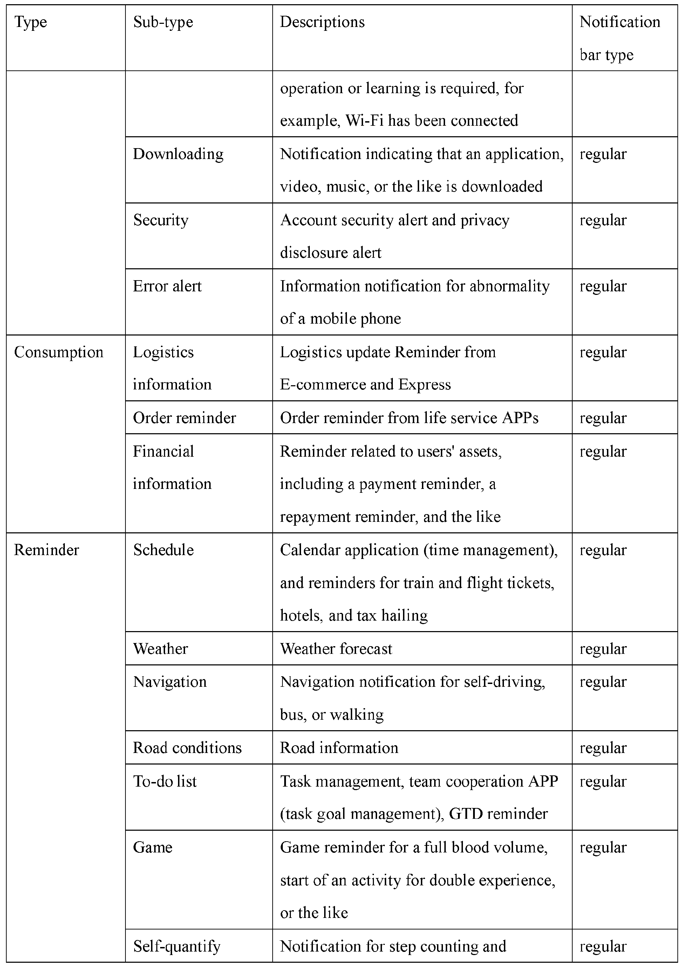

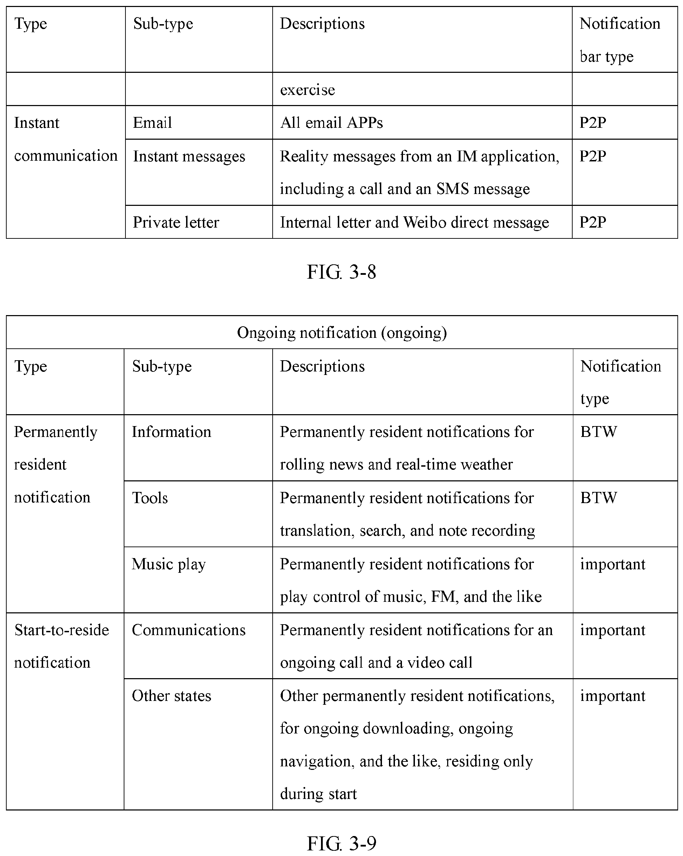

FIG. 3-1 is a schematic diagram showing messages at three levels in a drop-down message notification bar;

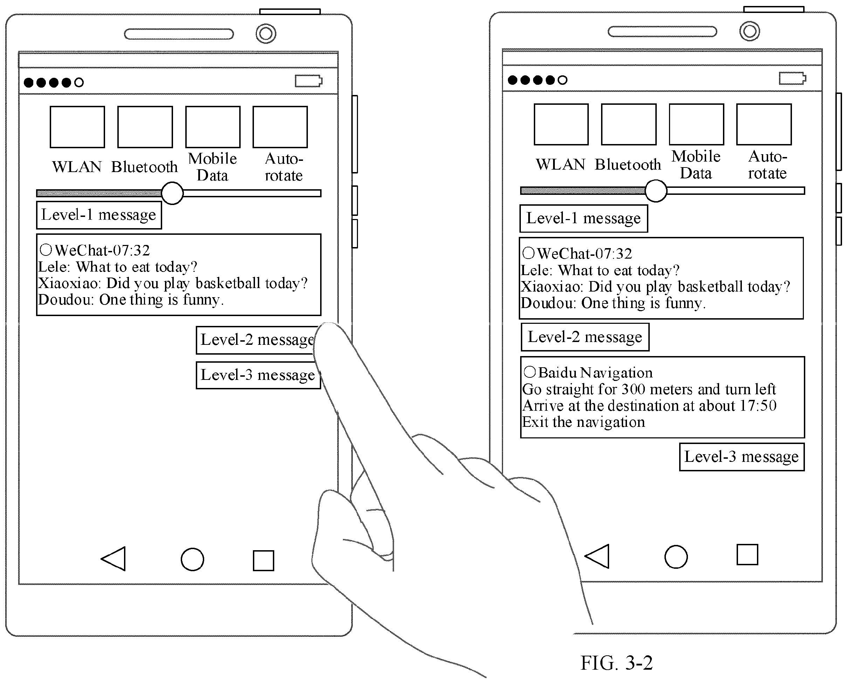

FIG. 3-2 is a schematic diagram of tapping a dialog box to display a message at level 2;

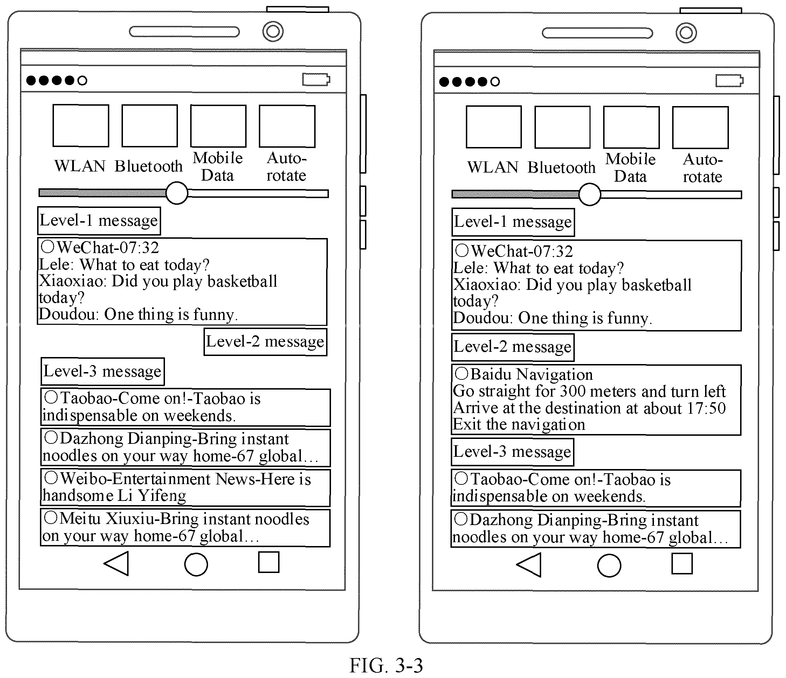

FIG. 3-3 is a schematic diagram of tapping a dialog box to display a message at a corresponding level;
FIG. 3-4A and FIG. 3-4B are a schematic diagram of shaking a mobile phone to hide a message at level 2 or 3;
FIG. 3-5 is a schematic diagram of tapping a fingerprint button to hide a message at level 2 or 3;
FIG. 3-6 is a schematic diagram showing that messages from different friends in WeChat are at different levels;
FIG. 3-7 is a schematic diagram of hiding a message at level 2 and/or 3;
FIG. 3-8 is a schematic diagram of grouping messages from different types of applications and functions;
FIG. 3-9 is a schematic diagram of an ongoing notification;

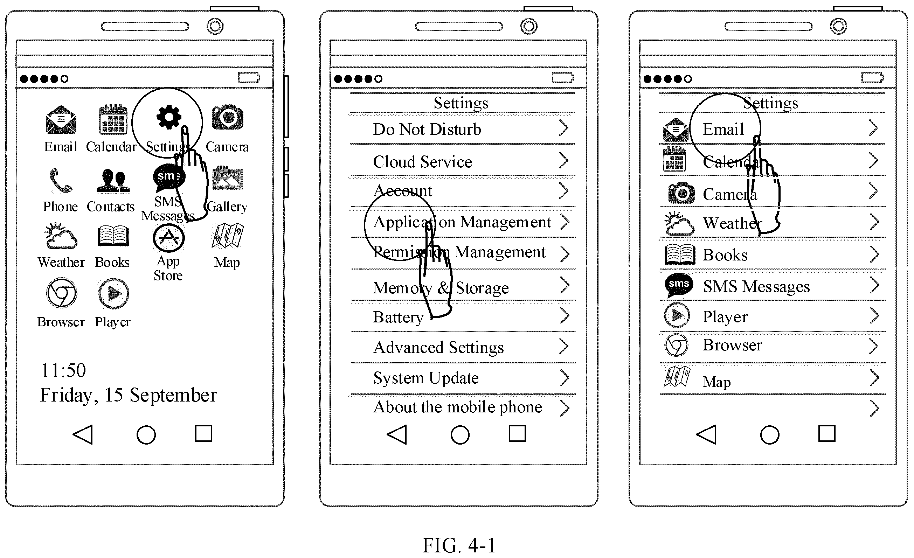

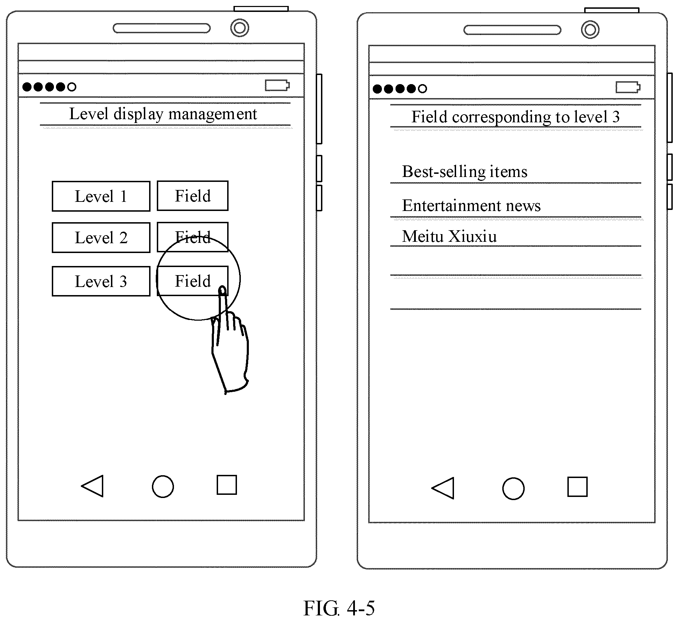

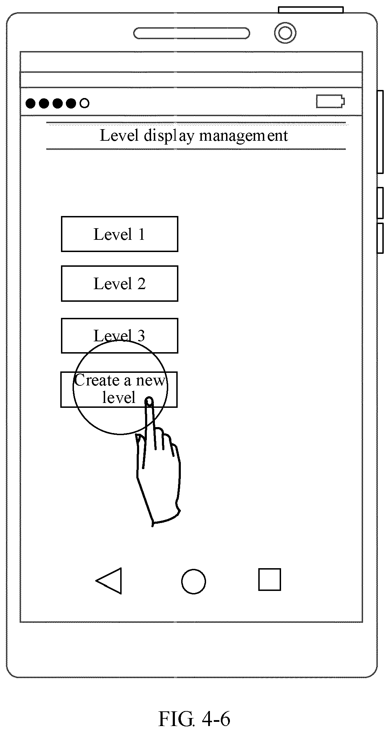

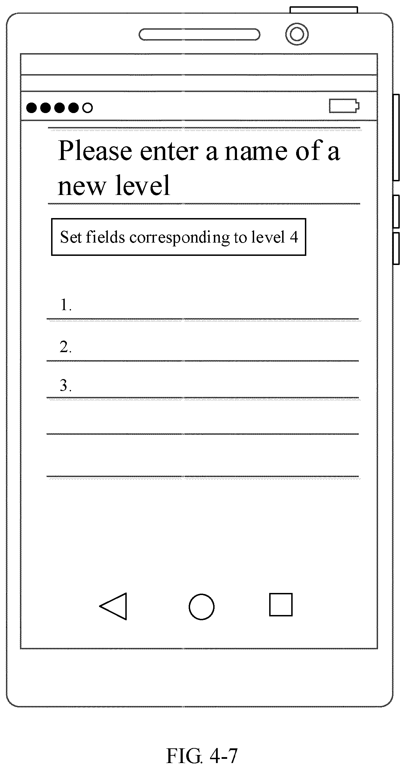

FIG. 4-1 is a schematic diagram of entering **Settings** by a user to modify a level setting;

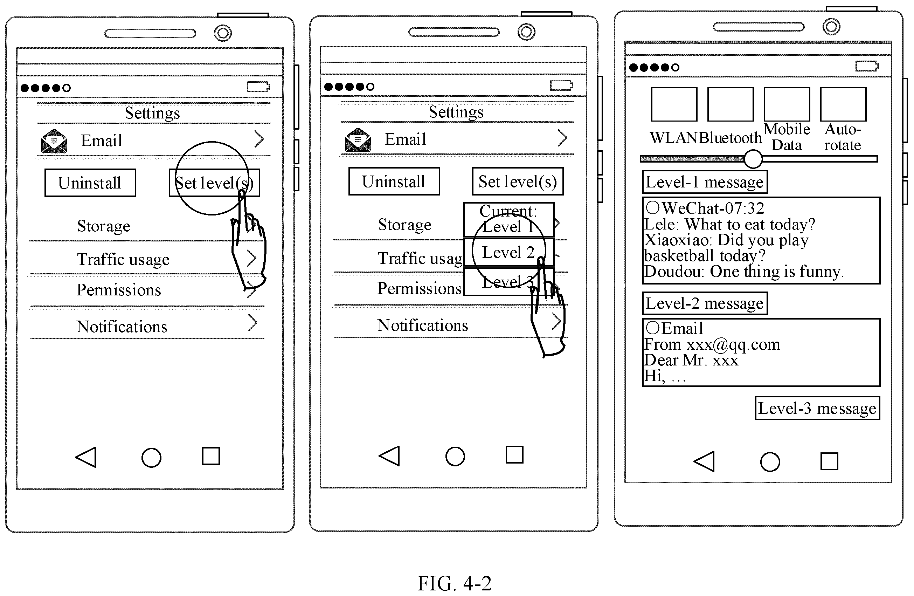

FIG. 4-2 is a schematic diagram of setting levels of messages from different applications by a user;

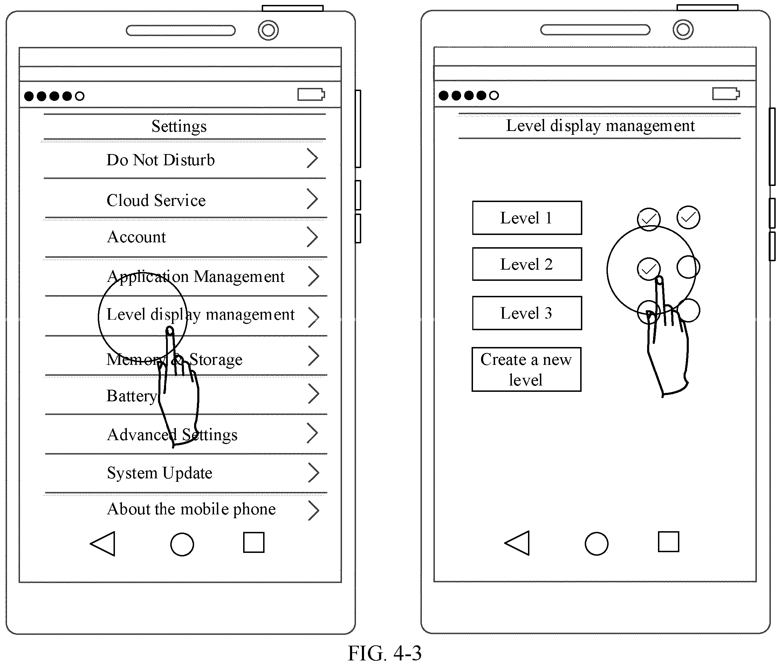

FIG. 4-3 is a schematic diagram of setting, by a user, whether messages at different levels are displayed;

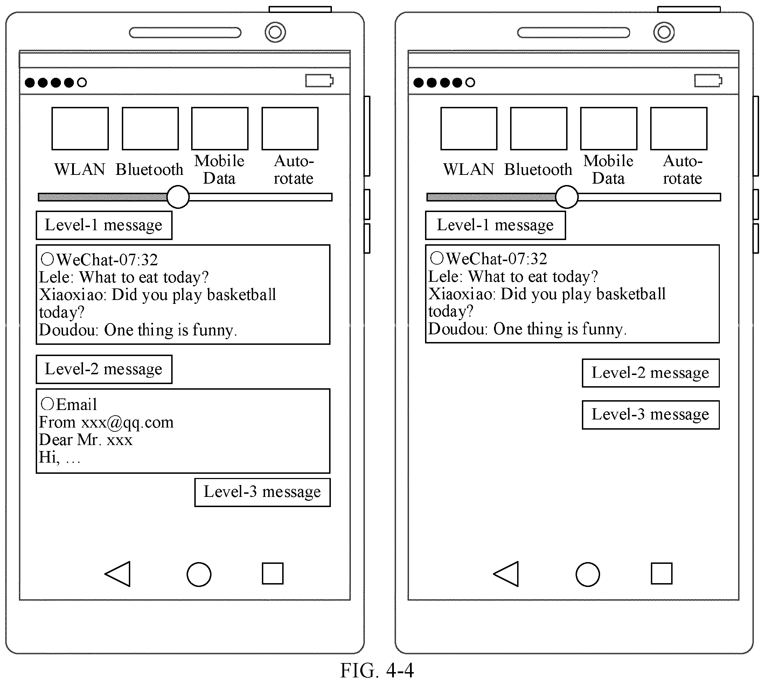

FIG. 4-4 is a schematic diagram showing whether messages at different levels are displayed before and after being processed;
FIG. 4-5 is a schematic diagram of setting a field corresponding to level 3;
FIG. 4-6 is a schematic diagram of creating a new level;
FIG. 4-7 is a schematic diagram of entering information about level 4;

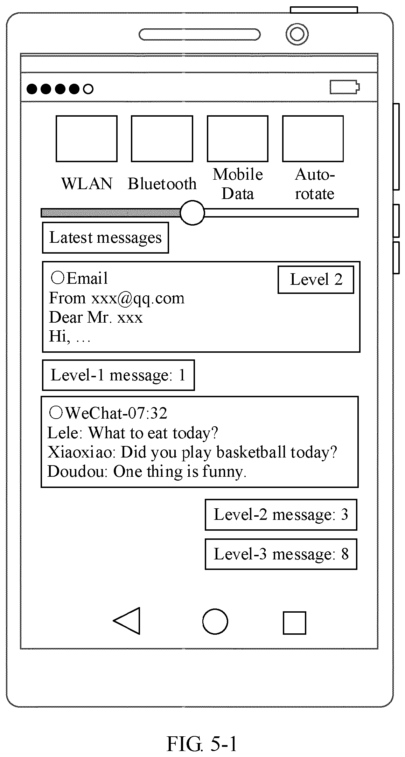

FIG. 5-1 is a schematic diagram showing that a latest message is received.

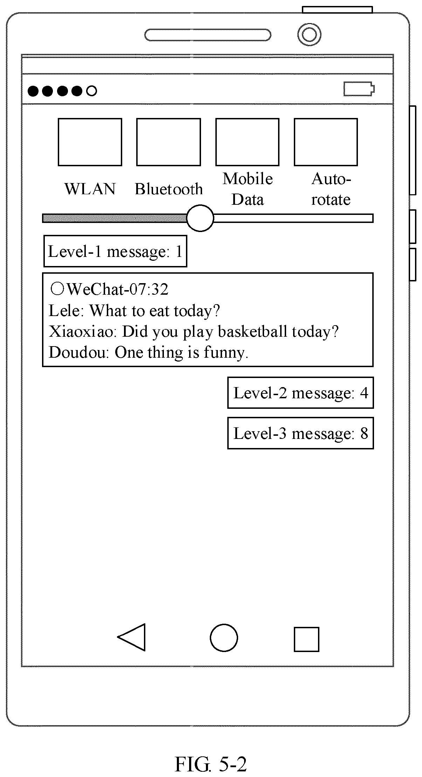

FIG. 5-2 is a schematic diagram of displaying quantities of messages at different levels;

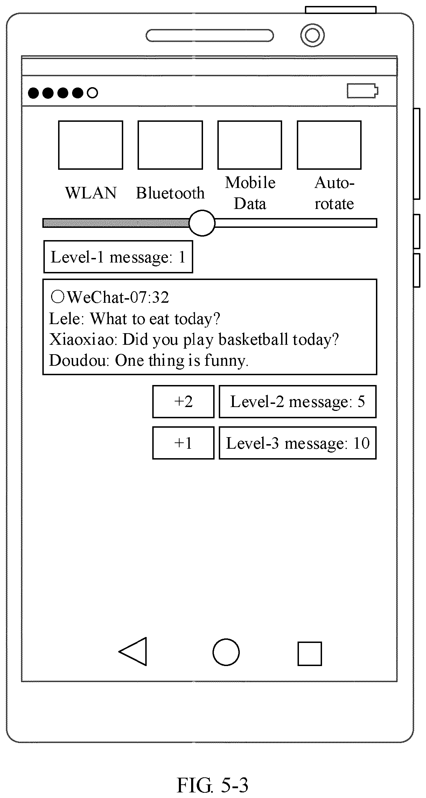

FIG. 5-3 is a schematic diagram of not displaying a latest message.

### DESCRIPTION OF EMBODIMENTS

The following clearly and completely describes technical solutions in the embodiments of this application with reference to the accompanying drawings in the embodiments of this application. Apparently, the described embodiments are merely some but not all of the embodiments of this application.

In the specification, claims, and accompanying drawings of this application, terms "first", "second", "third", "fourth", and the like (if any) are intended to distinguish between similar objects, but do not necessarily indicate a particular order or sequence. It should be understood that data termed in such a way are interchangeable in proper circumstances so that the embodiments described herein can be implemented in an order other than the order illustrated or described herein. In addition, terms "include", "have" and any variants of the terms are intended to cover non-exclusive inclusions. For example, processes, methods, systems, products, or devices that include a series of steps or units are not necessarily limited to those clearly listed steps or units, but may include other steps or units that are not clearly listed or that are inherent to these processes, methods, systems, products or devices.

With the development of mobile terminals, more applications may be downloaded and installed. Many applications send notification messages to a mobile terminal. A smartphone is used as an example. There may be a communications application, a shopping application, a social application, and the like on a smartphone. Many applications usually push messages every day or regularly, for example, a discount promotion message pushed by the shopping application, hot news pushed by the social application, and a friend message from the communications application. Among a large number of messages (FIG. 1-1 is a schematic diagram of a drop-down message notification bar of an intelligent terminal), some messages are important, for example, a message from a relative or a colleague in a communication application; and some messages are unimportant, for example, a discount promotion message pushed by a shopping application. Even if messages are from a same application, the messages also have different importance. For example, a logistics message and a latest commodity message that are from a shopping application are important. If performing determining by browsing messages one by one, a user may consume time and energy. In the embodiments of this application, levels of different messages are classified, so that only unimportant content can be hidden when messages are browsed, with no need to waste time and energy in determining whether the messages are important, ensuring great convenience and good user experience.

Specifically, FIG. 1-2 is a schematic diagram of a terminal according to this application. The terminal may be any terminal device such as a mobile phone, a tablet computer, a personal digital assistant (Personal Digital Assistant, PDA), a point of sales (Point of Sales, POS) terminal, or a vehicle-mounted computer. That the terminal is a mobile phone is used as an example.

FIG. 1-2 is a block diagram of a partial structure of a mobile phone related to a terminal A according to an embodiment of this application. The mobile phone includes components such as a radio frequency (Radio Frequency, RF) circuit A-10, a memory A-20, an input unit A-30, a display unit A-40, a sensor A-50, an audio circuit A-60, a wireless fidelity (wireless fidelity, Wi-Fi) module A-70, a processor A-80, and a power supply A-90. A person skilled in the art may understand that the structure of the mobile phone shown in the figure does not constitute a limitation on the mobile phone, and the mobile phone may include more or fewer components than those shown in the figure, or a combination of some components, or components arranged differently.

The RF circuit A-10 may be configured to: send and receive a signal in an information sending and receiving process or in a call process, and particularly, after receiving downlink information of a base station, send the downlink information to the processor A-80 for processing; and in addition, send uplink data to the base station. Generally, the RF circuit A-10 includes but is not limited to an antenna, at least one amplifier, a transceiver, a coupler, a low noise amplifier (Low Noise Amplifier, LNA), or a duplexer. In addition, the RF circuit A-10 may further communicate with another device by using a wireless communications network. Any communications standard or protocol may be used for the foregoing wireless communication, and includes but is not limited to a global system for mobile communications (Global System for Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, or a short messaging service (Short Messaging Service, SMS).

The memory A-20 may be configured to store a software program and/or a module. The processor A-80 runs the software program and/or the module stored in the memory A-20, to execute various function applications of the mobile phone and process data. The memory A-20 may mainly include a program storage area and a data storage area. The program storage area may store an operating system, an application program required by at least one function (such as a sound or an image playing function), and the like. The data storage area may store data (such as audio data and a phonebook) created according to use of the mobile phone, and the like. In addition, the memory A-20 may include a high-speed random access memory, and may further include a non-volatile memory, for example, at least one magnetic disk storage device, a flash memory device.

The input unit A-30 may be configured to: receive entered digit or character information, and generate key signal input related to user settings and function control of the mobile phone. Specifically, the input unit A-30 may include a touch panel A-31 and another inputdevice A-32. The touch panel A-31, also referred to as a touchscreen, may collect a touch operation performed by a user on or near the touch panel A-31 (for example, an operation performed by the user on or near the touch panel A-31 by using any suitable object or accessory such as a finger or a stylus), and drive a corresponding connection apparatus according to a preset program. Optionally, the touch panel A-31 may include two components: a touch detection apparatus and a touch controller. The touch detection apparatus detects a touch orientation of the user, detects a signal brought by the touch operation, and transfers the signal to the touch controller. The touch controller receives touch information from the touch detection apparatus, converts the touch information into contact coordinates, and sends the contact coordinates to the processor A-80; and can receive and execute a command sent by the processor A-80. In addition, the touch panel A-31 may be implemented by using a plurality of types such as a resistive type, a capacitive type, an infrared type, and a surface acoustic wave type. In addition to the touch panel A-31, the input unit A-30 may further include the another VR device A-32. Specifically, the another VR device A-32 may include but is not limited to one or more of a physical keyboard, a function button (such as a volume control button or a power button), a track ball, a mouse, or a joystick.

The display unit A-40 may be configured to display information entered by the user or information provided for the user, and various menus of the mobile phone. The display unit A-40 may include a display panel A-41. Optionally, the display panel A-41 may be configured in a form of a liquid crystal display (Liquid Crystal Display, LCD), an organic light-emitting diode (Organic Light-Emitting Diode, OLED), or the like. Further, the touch panel A-31 may cover the display panel A-41. After detecting a touch operation on or near the touch panel A-31, the touch panel A-31 transfers the touch operation to the processor A-80 to determine a type of the touch event, and then the processor A-80 provides corresponding visual output on the display panel A-41 based on the type of the touch event. In FIG. 4-3, the touch panel A-31 and the display panel A-41 are used as two independent components to implement input and output functions of the mobile phone. However, in some embodiments, the touch panel A-31 and the display panel A-41 may be integrated to implement the input and output functions of the mobile phone.

The mobile phone may further include at least one sensor A-50 such as a light sensor, a motion sensor, or another sensor. Specifically, the light sensor may include an ambient light sensor and a proximity sensor. The ambient light sensor may adjust luminance of the display panel A-41 based on brightness of ambient light. The proximity sensor may turn off the display panel A-41 and/or backlight when the mobile phone is moved to an ear. As one type of the motion sensor, an accelerator sensor may detect magnitude of accelerations in all directions (which are generally three axes), may detect magnitude and a direction of gravity when being stationary, and may be configured to identify an application of a mobile phone posture (for example, switch between a landscape mode and a portrait mode, a related game, and magnetic force posture calibration), vibration identification related functions (such as step counter and knock), and the like. For other sensors such as a gyroscope, a barometer, a hygrometer, a thermometer, and an infrared sensor that may be further disposed on the mobile phone, details are not described herein.

The audio circuit A-60, a speaker A-61, and a microphone A-62 may provide an audio interface between the user and the mobile phone. The audio circuit A-60 may transmit, to the speaker A-61, an electrical signal converted from received audio data, and the speaker A-61 converts the electrical signal into a sound signal for outputting. In addition, the microphone A-62 converts a collected sound signal into an electrical signal. The audio circuit A-60 receives the electrical signal, converts the electrical signal into audio data, and outputs the audio data to the processor A-80 for processing; and then processed audio data is sent to, for example, another mobile phone, by using the RF circuit A-10, or the audio data is sent to the memory A-20 for further processing.

Wi-Fi is a short-distance wireless transmission technology. The mobile phone may help, by using the Wi-Fi module A-70, the user send and receive an email, browse a web page, access streaming media, and the like. The Wi-Fi module A-70 provides wireless broadband internet access for the user. Although FIG. 1-2 shows the Wi-Fi module A-70, it may be understood that the Wi-Fi module A-70 is not a necessary component of the mobile phone, and the Wi-Fi module A-70 may be omitted as required without changing the scope of the essence of the present invention.

The processor A-80 is a control center of the mobile phone, and is connected to various components of the entire mobile phone by using various ports and lines. By running or executing the software program and/or the module stored in the memory A-20, and invoking data stored in the memory A-20, the processor A-80 performs various functions of the mobile phone and processes data, to perform overall monitoring on the mobile phone. Optionally, the processor A-80 may include one or more processing units. Preferably, an application processor and a modem processor may be integrated into the processor A-80. The application processor mainly processes an operating system, a user interface, an application program, and the like. The modem processor mainly processes wireless communication. It may be understood that the modem processor may alternatively not be integrated into the processor A-80.

The mobile phone further includes the power supply A-90 (such as a battery) that supplies power to the components. Preferably, the power supply A-90 may be logically connected to the processor A-80 by using a power supply management system, to implement functions such as charging and discharging management and power consumption management by using the power supply management system. The mobile phone may further include a camera, a Bluetooth module, and the like, which are not shown though, and details are not described herein.

In this application, classification for an important message and an unimportant message is performed in advance. In this case, when new messages are seen in a drop-down message notification bar, the smartphone can automatically filter out unimportant messages simply by performing some operations, and retain important messages, to achieve an effect shown in FIG. 1-3 (FIG. 1-3 is a schematic diagram of a drop-down message notification bar with only an important message retained) and save user's time and energy. It should be noted that, after being filtered out, the unimportant message is not displayed in the drop-down message notification bar, which is referred to as removing the unimportant message out of the drop-down message notification bar herein. After the unimportant message is removed, a dialog box "Unimportant unread message" may be displayed, or a dialog box "Unimportant unread message" may not be displayed. This is not limited herein. The dialog box "Unimportant unread message" may be clicked by the user, and the unimportant message that has been removed is displayed again, or nothing may be displayed. This is not limited herein. In some feasible embodiments, in addition to "Unimportant unread message", "Hide messages", a prompt icon, or the like may further be displayed. This is not limited herein. In the embodiments of this application, displaying "Unimportant unread message" is used as an example for description.

In some feasible embodiments, a specific operation of removing the unimportant unread message may be discussed in terms of two states: a screen-on state and a screen-off state. As shown in FIG. 1-4 (FIG. 1-4 is a schematic diagram of tapping a power button by a user to enter a drop-down message notification bar), in the screen-off state, the user may tap the power button to enter the drop-down message notification bar, and various currently received messages are displayed in the notification bar, including a message from a communications application, a message from a shopping application, a message from a social application, and the like. In this case, when the user may turn off a screen, and then turn on the screen again as shown in FIG. 1-5 (FIG. 1-5 is a schematic diagram of tapping the power button by the user to enter the drop-down message notification bar again), an unimportant message can be removed, and an important message and a dialog box "Unimportant unread message" can be retained. In some feasible embodiments, as shown in FIG. 1-6 (FIG. 1-6 is a schematic diagram of tapping the dialog box "Unimportant unread message" by the user to display the unimportant message), the user may tap the dialog box "Unimportant unread message" to display the removed unimportant message. In some feasible embodiments, the unimportant message may also be removed only when the screen is turned on again after several seconds that elapses after the screen is turned off, for example, 10 seconds. If the screen is turned on within 10 seconds, the unimportant unread message may further be displayed and seen.

In the embodiments of this application, when the mobile phone is in a screen-on and unlocked state, as shown in FIG. 1-7 (FIG. 1-7 is a schematic diagram showing that the mobile phone in a screen-on state), the user may perform downward pulling from a top of the screen to display the drop-down message notification bar, as shown in FIG. 1-8 (FIG. 1-8 is a schematic diagram of performing downward pulling by the user from the top of the screen to obtain the drop-down message notification bar). In this case, the drop-down message notification bar displays received messages including an important message and an unimportant message. Next, the user may pull the drop-down message notification bar upward to display a home screen, and then pull the drop-down message notification bar downward, as shown in FIG. 1-9 (FIG. 1-9 is a schematic diagram of closing and opening the drop-down message notification bar by the user, and the user may also remove the unimportant message by performing another operation, such as tapping a home button, directly turning off the screen, or switching to another application by using a multitask function). In this case, the drop-down message notification bar may display only the important message, remove the unimportant message, and may further retain the dialog box "Unimportant unread message".

In some feasible embodiments, the drop-down message notification bar may display a dialog box "Hide unimportant unread message", "Remove unimportant unread message", or "One tap to remove unimportant unread message", as shown in FIG. 1-10 (FIG. 1-10 is a schematic diagram of tapping the dialog box to remove an unimportant message), so that when all messages are displayed in the drop-down message notification bar of the terminal, an unimportant message can be removed after the dialog box tapped. In some feasible embodiments, the unimportant message may also be removed only by pulling the notification bar downward after a preset period of time that elapses after the drop-down message notification bar is pulled upward, for example, 10 seconds. If the screen is turned on within 10 seconds, the unimportant unread message may further be displayed and seen.

In some feasible embodiments, the mobile phone may further be shaken according to a specific rule, so that a gravity and acceleration sensor of the mobile phone senses the shake, and a step of removing an unimportant message is performed, as shown in FIG. 1-11 (FIG. 1-11 is a schematic diagram of removing the unimportant message by shaking the mobile phone). In this case, only an important message instead of the unimportant message is displayed in the drop-down message notification bar. In some feasible embodiments, as shown in FIG. 1-12 (FIG. 1-12 is a schematic diagram of tapping a fingerprint button to remove an unimportant message), the fingerprint button may also be tapped to remove the unimportant message. The tap is a single-tap operation, a double-tap operation, or a multi-tap operation that is performed according to a specific rhythm, and this is not limited herein.

It should be noted that, in the drop-down message notification bar, if seeing an important message, the user may perform tap to read the message, or may tap a clear button to clear the message, or may not perform any processing. It should be noted that, when messages that are tapped and read or cleared include an important message and an unimportant message, the messages are no longer displayed in the drop-down message notification bar; and among other messages on which no processing is performed, an important message may continue to be retained in the drop-down message notification bar. That is, after the user performs an operation of removing the unimportant message, the important message may still be retained in the drop-down message notification bar, but the unimportant message may be cleared, or may be displayed again when "Unimportant unread message" is tapped. This is not limited herein.

It should be noted that, in this application, the function of removing an unimportant message on a smartphone may also be applied to another intelligent terminal, for example, a tablet computer shown in FIG. 1-13 (FIG. 1-13 is a schematic diagram of displaying a drop-down message notification bar on the tablet computer). Because an operation of the tablet computer is similar to that of the smartphone, details are not described again.

In view of this, an embodiment of this application provides a message processing method. FIG. 2-1 shows a message processing method. The method includes the following steps:
101: A user performs a first operation on a terminal, and in response to the first operation, displays a first unread message and a second unread message on a first user interface of the terminal.

102: After the first user interface is exited, the user performs a second operation on the terminal; and in response to the second operation, if the first unread message and the second unread message are still unread messages, the first unread message instead of the second unread message is displayed on a second user interface of the terminal, where the first unread message is a non-unimportant unread message, and the second unread message is an unimportant unread message.

An embodiment of this application further provides a message processing method. FIG. 2-2 shows a message processing method. The method includes the following steps:
201: A user performs a first operation on a terminal; and in response to the first operation, and a first unread message and a second unread message are displayed on a first user interface of the terminal.

202: If the first user interface is not exited, the user performs a second operation on the terminal; and in response to the second operation, if the first unread message and the second unread message are still unread messages, the terminal stops displaying the second unread message and maintains displaying of the first unread message on the first user interface, where the first unread message is a non-unimportant unread message, and the second unread message is an unimportant unread message.

The first operation performed by the user on the terminal may be turning on a screen, performing tap to open the first user interface, or performing another operation so that the terminal displays the first user interface, and this is not limited herein. The first user interface is a drop-down message notification bar or a HiBoard. It should be noted that, both the second user interface and the first user interface may be drop-down message notification bars; or both are HiBoards; or one is a drop-down message notification bar, and the other is a HiBoard. This is not limited herein. Specifically, the second operation may be at least one of: shaking the terminal by a preset amplitude, for a preset quantity of times, or for preset duration; tapping a preset virtual button on the terminal; or sending preset audio information to the terminal.

An embodiment of this application further provides a message processing method. FIG. 2-3 shows a message processing method. The method includes the following steps.
301: A user performs a first operation on a terminal, and in response to the first operation, the terminal displays a first unread message and a second unread message on a first user interface, where the first user interface is a drop-down message notification bar or a HiBoard.

302: Determine, based on at least one of: a source function of the first unread message, a source application of the first unread message, or whether the first unread message includes a preset field, that the first unread message is a non-unimportant unread message; and determine, based on at least one of: a source function of the second unread message, a source application of the second unread message, or whether the second unread message includes a preset field, that the second unread message is an unimportant unread message.

In some feasible embodiments, messages pushed by some applications or functions are unimportant. Therefore, when messages from the applications or functions are received, it is determined that the messages are unimportant unread messages. **In** some feasible embodiments, a field such as "on sale" may also be set. When the field is obtained, it is determined that the messages are unimportant; in this case, the messages are determined as unimportant unread messages.

303: After preset duration that elapses after the first user interface is exited, in response to a second operation performed by the user on the terminal, if the first unread message and the second unread message are still unread messages, display the first unread message instead of the second unread message on a second user interface of the terminal, where the first unread message is a non-unimportant unread message, the second unread message is an unimportant unread message, and the second user interface is a drop-down message notification bar or a HiBoard.

In some feasible embodiments, the preset duration may be 10 seconds or one minute. This is not limited herein. The second operation is at least one of: shaking the terminal by a preset amplitude, for a preset quantity of times, or for preset duration; tapping a preset virtual button on the terminal; or sending preset audio information to the terminal.

304: If the first user interface is not exited, in response to a second operation performed by the user on the terminal, if the first unread message and the second unread message are still unread messages, display the first unread message instead of the second unread message on the first user interface of the terminal, where the first unread message is a non-unimportant unread message, and the second unread message is an unimportant unread message.

In some feasible embodiments, both the first user interface and the second user interface may be drop-down message notification bars; or both are HiBoards; or one is a drop-down message notification bar, and the other is a HiBoard. This is not limited herein. In some feasible embodiments, when the first user interface is displayed, the second operation may be performed regardless of whether the first user interface is not exited. If the first user interface has exited, a corresponding message may be displayed in the second user interface. The second user interface may be the same as or different from the first user interface. This is not limited herein. If the first user interface is not exited, after a response to the second operation, a corresponding message may continue to be displayed on the first user interface.

In some feasible embodiments, drop-down messages may not only be classified into important and unimportant messages, but also may be classified into a plurality of levels according to importance. Using three levels as an example, there may be level 1, level 2, and level 3. Level 1 is a highest importance level, level 2 is a second-highest importance level, and level 3 is a lowest important level. As shown in FIG. 3-1 (FIG. 3-1 is a schematic diagram showing messages at three levels in a drop-down message notification bar), there are a message at level 1, a message at level 2, and a message at level 3; in this case, the drop-down message notification bar may display a message at level 1, messages at levels 1 and 2; or messages at levels 1, 2, 3. This is not limited herein.

An indication dialog box about a level may be set on an upper left corner of a message. As shown in FIG. 3-2 (FIG. 3-2 is a schematic diagram of tapping a dialog box to display a message at level 2), the dialog box may be tapped to display or hide the message at the level. For example, when a dialog box "Level-2 message" is tapped, the message at level 2 is displayed. **In** some feasible embodiments, as shown in FIG. 3-3 (FIG. 3-3 is a schematic diagram of tapping a dialog box to display a message at a corresponding level), if a dialog box "Level-3 message" is tapped, a message at level 3 may be displayed; or if dialog boxes "Level-2 message" and "Level-3 message" are tapped, a message at level 2 and a message at level 3 are displayed simultaneously. It should be noted that, when a message at a level is displayed, the message at the level is hidden after the dialog box is tapped. For example, when the message at level 2 is not displayed, the message at level 2 may be displayed by tapping the dialog box "Level-2 message". In some feasible embodiments, when "Level-3 message" is tapped, if the message at level 2 is hidden, the message at level 2 and the message at level 3 may be displayed simultaneously; or when the message level 2 is hidden through tapping, the message at level 2 and the message at level 3 may be hidden simultaneously. This is not limited herein. In some feasible embodiments, all messages at a level may be cleared simultaneously. For example, when the dialog box "Level-3 message" is dragged to flick rightward, all messages at level 3 are cleared. In some feasible embodiments, the messages at level 3 may also be cleared by pressing and holding the dialog box "Level-3 message", or pressing, holding, and sliding the dialog box "Level-3 message" back and forth, or tapping a clear button. This is not limited herein. In this case, no current messages at level 3 are displayed in the drop-down message notification bar. Certainly, after clearing, a newly received message at level 3 can further be displayed in the drop-down message notification bar. It should be noted that the "clear" herein is different from the foregoing "remove". The "clear" is deleting the message from the drop-down message notification bar, so that the message is no longer displayed in the drop-down notification bar. The "remove" may be expressed as hiding the message in the drop-down message notification bar, where when a related instruction is received (for example, a dialog box at this level is tapped), the message can further be displayed.

In some feasible embodiments, as shown in FIG. 3-4 A and FIG. 3-4B (FIG. 3-4 A and FIG. 3-4B are a schematic diagram of shaking a mobile phone to hide a message at level 2 or 3), the mobile phone may be shaken to hide an unimportant message. For example, the mobile phone is shaken once to hide a message at level 3, and is shaken once again to hide a message at level 2. In some feasible embodiments, if the mobile phone is shaken once again, the message at level 2 and/or the message at level 3 may be displayed. This is not limited herein. In some feasible embodiments, as shown in FIG. 3-5 (FIG. 3-5 is a schematic diagram of tapping a fingerprint button to hide the message at level 2 or the message at level 3), messages at different levels may be hidden by tapping the fingerprint button. For example, a single-tap operation is performed on the fingerprint button to hide the message at level 3, and a double-tap operation is performed to hide the message at level 3 and the message at level 2. This is not limited herein.

In some feasible embodiments, in addition to setting all messages from an application to be at a same level, different priorities may further be set for different messages from a same application. For example, among messages from Taobao, an advertisement message is a message at level 3, a logistics message is a message at level 2, and a message from a friend is a message at level 1. This is not limited herein. As shown in FIG. 3-6 (FIG. 3-6 is a schematic diagram showing that messages from different friends in WeChat are at different levels), in the WeChat application, different levels are determined through grouping. For example, messages from a colleague and a relative are messages at level 1, messages about a hobby, for example, a message from a bicycle friend, are messages at level 2, and some messages that cannot be grouped and that are less important are messages at level 3. As shown in FIG. 3-7 (FIG. 3-7 is a schematic diagram of hiding a message at level 2 and/or 3), the message at level 2 and/or the message at level 3 may be hidden. The operation is similar to the foregoing operation, and details are not described again.

**In** this embodiment of this application, messages from different applications may be graded based on the different applications, grading may be performed based on different types of messages in an application, grading may be performed by using a visible field in a message , or grading may be performed by using an invisible field in a message. This is not limited herein.

That messages from different types of applications and functions are graded based on the different types of applications and functions is used as an example, as shown in FIG. 3-8 (FIG. 3-8 is a schematic diagram of grouping messages from different types of applications and messages from functions). All messages corresponding to "P2P" in a notification bar category may be set as messages at level 1 (or may be set as messages at another level, which is not limited herein), that is, at a highest importance level, and the messages are always retained in the drop-down message notification bar as long as the messages are not deleted; "regular" is at a general importance level, and a message corresponding to "regular" is set as a message at level 2; and "BTW" is "by the way", that is, a lowest importance level, and a message corresponding to "BTW" is set as a message at level 3. After being removed, the message at level 2 and the message at level 3 are hidden and not displayed. It should be noted that different types of messages may not only include messages from applications, but also may include messages from an intelligent terminal itself, for example, a battery level notification message and a message about insufficient storage space. This is not limited herein.

In some feasible embodiments, some messages are messages from ongoing (ongoing) notifications , that is, messages from an application or a function that is executing a task, for example, a music player, uploading, or downloading. As shown in FIG. 3-9 (FIG. 3-9 is a schematic diagram showing an ongoing notification), in some feasible embodiments, messages from ongoing notifications may be grouped into permanently resident notification messages and start-to-reside notification messages. The permanently resident notification messages are message that are always retained in the drop-down message notification bar regardless of whether the messages are used or not, for example, a real-time weather app message or a search function message. However, the start-to-reside notification message is a message that is retained in the drop-down message notification bar only after proactive startup by a user, for example, a call message, a downloading message, or a navigation message. In some feasible embodiments, setting and classification for the permanently resident notification message and the start-to-reside notification message may be performed as required. For example, a real-time weather message may be set as a start-to-reside notification message or a permanently resident notification message. This is not limited herein. In this embodiment of this application, a message whose notification type is "important" is a message at a highest importance level, that is, a message at level 1, and a message corresponding to "BTW" is a message at level 3, that is, an unimportant unread message. Even if the message corresponding to "BTW" is a permanently resident notification message, the message may be hidden after being processed.

In this embodiment of this application, levels of different types of messages may be preset before delivery without accepting modification by a user, or may be modified by a user. The following provides descriptions by using an example in which modification by a user may be accepted. As shown in FIG. 4-1 (FIG. 4-1 is a schematic diagram of entering **Settings** by a user to modify a level setting), the user may enter **Application Management** by entering **Settings.** Various applications may be seen in **Application Management,** that is, one of the applications may be tapped. An email application is used as an example, as shown in FIG. 4-2 (FIG. 4-2 is a schematic diagram of setting levels of messages from different applications by a user). After tapping the email application, the user may perform some settings for the email application, for example, for setting levels, that is, levels of messages from the email application. After "Set level(s)" is tapped, a drop-down bar may be displayed, a current level (level 1) is displayed, and optional levels (level 1, level 2, and level 3) are also displayed. The user may still select level 1, or may select level 2 or level 3; and if level 2 is selected, displaying or hiding is performed below the level-2 message in the drop-down message notification bar.

In some feasible embodiments, whether messages at different levels are displayed may further be set in the settings item, as shown in FIG. 4-3 (FIG. 4-3 is a schematic diagram of setting, by a user, whether the messages at the different levels are displayed. The user taps a check option behind level 2, the first check option from the left may be a check option indicating whether a message at level 2 is displayed before the drop-down message notification bar is processed. If the check option is ticked, before being processed, the message at level 2 may be seen by using the drop-down message notification bar. However, if a check option behind level 3 is ticked, a message at level 3 is also hidden before being processed. The processed herein is the foregoing processing such as withdrawing the drop-down message notification bar and pulling the notification bar downward again, tapping the fingerprint button, or tapping "One tap to remove an unimportant unread message". The first check option from the right may be a check option indicating whether a message at this level is displayed after being processed. For example, among check options, a check option only behind level 1 is ticked, and none of check options behind level 2 and level 3 is ticked. In this case, after being processed, a message only at level 1 is displayed, a message at level 2 and a message at level 3 are not displayed, but are hidden or cleared, as shown in FIG. 4-4 (FIG. 4-4 is a schematic diagram of whether messages at different levels are displayed before and after being processed).

In some feasible embodiments, a method for determining levels of different messages is performed based on an application or a function. However, there may also be different types of messages in some applications or functions; in this case, levels of the messages may also be different, and field-related settings may be performed for different levels, that is, a message can be considered as a message at a level provided that the message meets some particular fields. As shown in FIG. 4-5 (FIG. 4-5 is a schematic diagram of setting a field specific for a level-3), a field corresponding to level 3 is tapped to enter a "Level-3 field"; in this case, different fields may be entered, for example, "Best-selling items", "Entertainment news", and "Meitu Xiuxiu". When a received message includes one or more of these fields, it may be considered that the message is a message at level 3, and whether the message is displayed may be determined based on a processing manner of the message at level 3.

In some feasible embodiments, different levels of messages may be determined based on both an application and a field. For example, if a message A is from an application A, and the message A includes a field "BAC", it may be considered that the message A is a message at level 3. Specifically, fields corresponding to different levels may be set in a settings item of an application. Details are not described again.

In some feasible embodiments, a new level may further be created. As shown in FIG. 4-6 (FIG. 4-6 is a schematic diagram of creating a new level), "Create a new level" is tapped to create a new level, for example, level 4; in this case, as shown in FIG. 4-7 (FIG. 4-7 is a schematic diagram of entering information about level 4), a name of level 4 may be entered, or a field corresponding to level 4 may be set, or whether a message at level 4 is displayed separately before and after processing may be set. This is not limited herein.

In some feasible embodiments, as shown in FIG. 5-1 (FIG. 5-1 is a schematic diagram of receiving a latest message), when the latest message is received, the latest message may be displayed at level 1, and a level of the latest message is displayed, for example, level 2. In some feasible embodiments, quantities of messages at different levels may be displayed in dialog boxes of the messages at the levels. As shown in FIG. 5-2 (FIG. 5-2 is a schematic diagram showing quantities of messages at different levels), there are one message at level 1, four messages at level 2, and eight messages at level 3. It should be noted that, after being processed, a latest message in FIG. 5-1 may be hidden in the Level-2 message in FIG. 5-2. Therefore, there are three messages at level 2 in FIG. 5-1, but there are four messages at level 2 in FIG. 5-2.

In some feasible embodiments, even if a latest message is received, the latest message may not be displayed as long as the latest message is not a message at a level that needs to be displayed before being processed. As shown in FIG. 5-3 (FIG. 5-3 is a schematic diagram showing that a latest message is not displayed), when a latest message is received, if the latest message is a message at level 2, a quantity of latest messages may be displayed on the left of a dialog box "Level-2 message", for example, "+2", that is, there are two latest messages, but the latest messages are not displayed; and if the latest message is a message at level 3, a quantity of latest messages, for example, "+1" is displayed on the left of "Level-3 message", that is, there is one latest message at level 3, but the latest messages are not displayed.

In some feasible embodiments, descriptions may be provided by using a user Mr./Ms. Liu as an example.

Mr./Ms. Liu, a salesman for intellectual property rights, has numerous customers thanks to a relatively good service capability. To keep frequent contact, Mr./Ms. Liu has to make a reply as soon as his mobile phone receives a message sent by a customer. However, there are always numerous messages or notifications sent by various different types of applications or functions on the mobile phone. Consequently, when a plurality of different types of messages are sent, whether the messages are important further needs to be determined one by one, which is quite time-consuming. Even because there are too many messages, a message from an important customer may be buried the large quantity of messages, and consequently a reply cannot be made immediately. This harms a relationship with the customer, affecting performance.

One day, Xiao Liu is taking a break in a coffee shop after an appointment with the customer. Many messages or notifications are still received this day, including a message about "Taobao sales", a credit card bill notification message, a message about weather forecast, a message about horoscopes, an email reminding message, a message about consumption information, a customer's message, and even a power notification message and a system update notification message. Among these messages, some are from customers, some are from family members, some may be from APPs for a stock market or the like followed by Mr./Ms. Liu, and some may be related to his own benefits; however, a lot of the messages are unimportant. Consequently, important messages and unimportant unread messages intermingle with each other, and need to be distinguished one by one, wasting time and energy. In addition, with any carelessness, Mr./Ms. Liu may miss some important messages, causing a large or small loss. After Mr./Ms. Liu uses a mobile phone with the function of this application, this problem is mitigated and even resolved. For details, refer to step S1 to step S8.

### S1: Receive a new message A.

The following uses a mobile phone as an example. A processing process of another terminal is similar to that of the mobile phone, and details are not described herein. The mobile phone receives a new message, for example, the message A. The new message herein is a new message received by the terminal from an external device, and is unrelated to message content or a message source. When receiving the new message, the mobile phone may mark the new message as an unread message. When receiving the message A, the mobile phone may enter a screen-on state; or may enter a state in which a partial screen is in a screen-on state, to display only the message A; or may be in a screen-off state in which only a sound or vibration prompt is used. This is not limited herein.

S2: In response to a first operation of a user, determine one or more unread messages that need to be displayed; and display the determined one or more unread messages in a drop-down message notification bar or on a HiBoard.

The user may operate the mobile phone to browse the unread messages, for example, opening the drop-down message notification bar, or opening the HiBoard. Generally, unread messages displayed and browsed by the user are all current unread messages. However, some terminals may display only a subset of all the current unread messages because of user's settings, as required by a special application, or in a special scenario. This is not limited in this application. Specifically, on a home screen (Home Screen), the drop-down message notification bar may be pulled from top to bottom, or some virtual buttons may be tapped to enter the drop-down message notification bar, or sound control may be performed to enter the drop-down message notification bar. This is not limited herein. In addition, the HiBoard may be opened by performing sliding or another preset operation on the home screen, to view a new-message list.

The drop-down message notification bar is used as an example. Content displayed on the HiBoard is similar to that in the drop-down message notification bar, and details are not described again. An unread message, that is, information that is not processed by the user, is displayed in the drop-down message notification bar (all of a message that the user performs tapping to view, reply, or delete in an unread message list in the drop-down message notification bar or on the HiBoard, a message that is opened by an APP corresponding to the message, and a message that the user performs an operation to mark as a read message, are considered as having been processed by the user, and belong to read information). The displayed unread message includes the message A. It should be noted that, in some feasible embodiments, content of the message A may be directly displayed in a message list in the drop-down message notification bar. In some other scenarios, for example, because too many unread messages need to be displayed, and the message A is arranged at the back, with limitation by a size of a terminal screen, the message A cannot be displayed on the current user interface, but is hidden; in this case, the message A can be displayed only after the user performs a further operation. For example, a (virtual or physical) button on the screen, such as more, pull-down, or fold, is operated or a preset gesture is executed, to display the unread message A on the screen. If the message A is included in the more unread messages and can be displayed only by tapping the virtual button, it is considered that the message A is displayed only when content of the message A is displayed on the screen, that is, when the user can learn related information of the message A (for example, a sender, time, and all or some of the content) based on screen displaying. A case in which the message A is not displayed on the current screen because the message A is hidden or folded, and the user does not perform an operation on the message A to display the message A, is not considered as displayed.

### S3. Mark the message A as displayed.

In this embodiment of this application, if the message A is displayed, the message A may be marked as displayed, to indicate that the message A has been displayed. Any message that is not displayed or that has not been displayed because of a display area size or a display policy of hiding, for example, a message for which only a quantity of unread messages displayed but no specific message sources (or senders/numbers), no time for sending/receiving messages, or no message content is specifically displayed, may be considered as an undisplayed message, and is not marked as displayed. Certainly, a terminal vendor or a user may define or modify a condition for "displayed". For example, a case in which some or all content is not displayed is considered as undisplayed; or a case in which a sender or time for receiving/sending a message is not displayed is considered as undisplayed; or another condition or a combination of conditions is used. This is not limited in this application.

### S4: Exit the current drop-down message notification bar or the HiBoard .

After browsing the displayed unread message, the user may exit a current unread message browsing screen, for example, closing the drop-down message notification bar or exiting the HiBoard. A specific manner may be that a finger pulls the drop-down message notification bar upward, to close the drop-down message notification bar; or a home button is operated to return to a home screen, or the screen is directly turned off to close the drop-down message notification bar. This is not limited herein. The terminal may also automatically exit the current drop-down message notification bar or the HiBoard. For example, if receiving no operations within a preset time, the mobile phone may also automatically close the drop-down message notification bar, or automatically enter a screen-off state to close the drop-down message notification bar. This is not limited herein.

### S5. Receive a message B.

In some feasible embodiments, a new message, for example, the message B, may be received when the drop-down message notification bar is in a closed state, for example, a screen-off state, or screen-on state but not on a screen showing the drop-down message notification bar. This step is optional, and may or may not be performed based on an actual situation.

S6: In response to a second operation of the user, determine one or more unread messages that need to be displayed, and display the determined one or more unread messages in the drop-down message notification bar or on the HiBoard.

Same as the first operation, the second operation may be tapping a main control button or a power button to turn on the screen, and then pulling the drop-down message notification bar downward from top to bottom on the screen, or tapping some virtual buttons to enter the drop-down message notification bar, or performing sound control to enter the drop-down message notification bar. This is not limited herein. Like the first operation, the second operation may also perform sliding or another preset operation on the home screen to start the HiBoard. The second operation may be any operation that can be performed to display a list of unread messages. Specifically, the second operation may be the same as or different from the first operation.

The unread messages that need to be displayed are an unread message that has never been displayed and an unread message that has been displayed and that is not unimportant. In other words, the unread messages that need to be displayed do not include an unread message in unread messages that has been displayed and that is unimportant. Therefore, it needs to be determined whether condition 1 is met: unread and undisplayed, or whether all of unread, displayed, and not unimportant are met simultaneously. A message that meets condition 1 is displayed. Alternatively, it needs to be determined whether condition 2 is met: unread, and that unimportant and displayed are not met. A message in the unread messages that does not meet condition 2 is displayed.

Only some of the messages may be displayed, but other messages are not displayed, to reduce a quantity of messages displayed in the drop-down message notification bar. Specifically, a message that is not displayed herein shall meet all of the following conditions: condition 1: an unimportant unread message; condition 2: an unread message; and condition 3: displayed. Whether a message has been displayed may be determined according to whether the message has a mark indicating that displaying has been performed, to be specific, the mark indicating that displaying has been performed in step S3. Determining whether a message is unread is also mentioned in step S2. Whether a message is unimportant may be determined by using a source application or a source function of the message, or may be determined by using a field (for example, a priority field or an ongoing field) in the message. The source application or the source function of the message and the field in the message may be identified by reading internal code. The following code is used as an example for description.

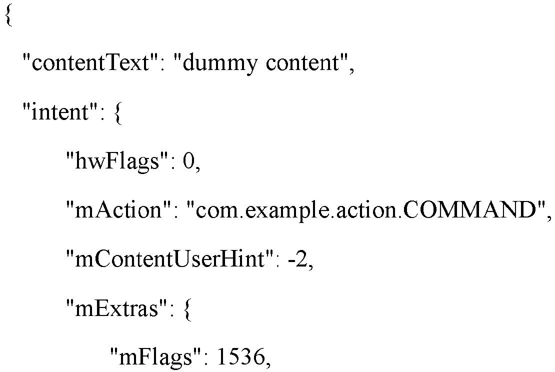

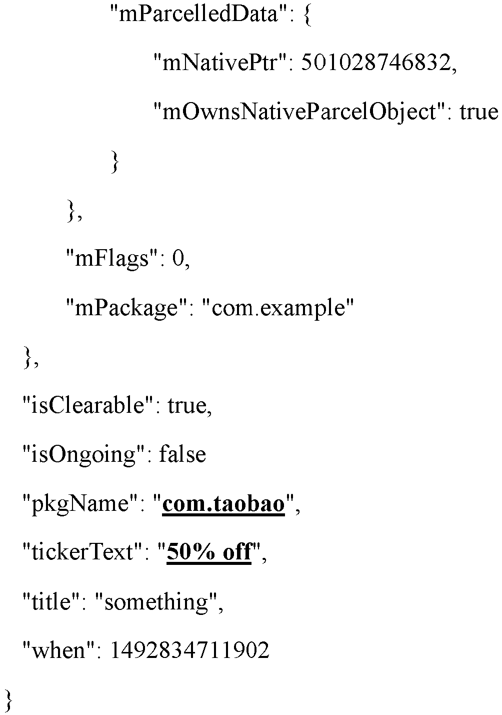

The foregoing code is compiled by using Java language, and "com.taobao" may be obtained from the code. In this case, it is determined that if the message is tapped, a Taobao application is started; then whether a message from the application is an unimportant unread message from a source application when Taobao is used as a source application may be determined based on a preset importance level. If the message from the application is an unimportant unread message from a source application, it is determined that the message is an unimportant unread message. In addition, "50% off" in the code may be obtained, and if the field is a preset field in an unimportant unread message, the message may be determined as an unimportant unread message by obtaining the field.

A terminal vendor or a user may set and edit a source application or a source function of a message and a correspondence between a field in the message and an importance level, and may even set different correspondences in different application scenarios or in different time periods. The correspondence may be a one-to-one correspondence, a more-to-one correspondence, or a one-to-more correspondence. This is not limited herein. If the message A is determined as an unimportant unread message, because the message A carries a mark indicating that displaying has been performed, the message A is not displayed. If the message A is determined as an unread message that is important, normal, or at another non-unimportant level, although the message A carries a mark indicating that displaying has been performed, the message A is also displayed.

For example, if the message A is a message pushed by a shopping application Amazon (Amazon), and the shopping application has been set on the mobile phone as a source application of an unimportant unread message, any message sent by the application is considered to be unimportant. Therefore, the message A is considered as an unimportant unread message. For another example, determining may be performed based on a field in a message. For example, any message including "on sale (On sale)" or "promotion" is identified as an unimportant unread message. If the message A is a message sent by an instant messaging application, and the instant messaging application is preset as a source application of a non-unimportant unread message, any message from the instant messaging application is considered as a non-unimportant unread message. In this case, when the message A does not meet condition 1, but meets condition 2, the message A is displayed. In addition, the source function is a battery level notification, system update, Wi-Fi connection success, or the like. A processing process of the source function is similar to that of the foregoing source application, and details are not described again.

In some feasible embodiments, the terminal may determine, based on a correspondence shown in Table 1, whether the message is unimportant, that is, determining an importance level of the message based only on a correspondence between a source application or function and an importance level. The source application is, for example, Amazon, Taobao, or Facebook. If determining is performed based on only a message source, the following may be determined based on the following table: If a received message is from Amazon, the message is determined as an unimportant unread message; and if the received message is from WeChat, the message is determined as a non-unimportant unread message. A source function is, for example, a low battery level notification or system update. If a received message is from the low battery level notification, the message is a non-unimportant unread message; and if the message is from the system update, the message is an unimportant unread message. As shown in Table 4, if it is found that a title of the message includes the following fields, it may be determined that the message is an unimportant unread message such as on sale, cheap, or 50% off. This is not limited herein.

In some feasible embodiments, the terminal may determine, based on a correspondence shown in Table 2, whether the message is unimportant, that is, determining an importance level of the message based on a correspondence among a source application, a message type, and an importance level. For messages that are from a same application, for example, Taobao, but have different message types, different importance levels may also be distinguished. For example, for an advertisement message, a logistics message, and a payment message that are from Taobao, the following may be determined based on Table 2: If the message is an advertisement message, the message may be determined as an unimportant unread message; and if the message is a logistics message or a payment message, the message may be determined as a non-unimportant unread message. For some applications, for example, an application of a product of a brand liked by a user, for example, a Nike application, an advertisement from Nike may also be a non-unimportant unread message. For example, as shown in Table 2, all of an advertisement message, a logistics message, and a payment message that are sent by Nike are non-unimportant unread messages. In some feasible embodiments, whether a message corresponding to a message type is important may also be determined by using only the message type. As shown in Table 3, regardless of a source application or a source function of a message, determining can be performed based on a message type of the message. For example, advertisement messages are unimportant unread messages; all of the advertisement messages are unimportant unread messages regardless of whether the advertisement messages are from Taobao or Nike. For example, a logistics message and a payment message are non-unimportant unread messages; the logistics message and the payment message are non-unimportant unread messages regardless of whether the logistics message and the payment message are from Taobao or Nike.

In some feasible embodiments, the terminal may determine, based on a correspondence shown in Table 4, whether a message is unimportant, that is, determining an importance level of the message based on whether the message includes a preset field or whether a particular field in the message includes particular content. If it is found that a title of the message includes the following fields, it may be determined that the message is an unimportant unread message, for example, on sale, cheap, or 50% off. This is not limited herein.

The foregoing methods for determining whether a message is unimportant may also be combined for use. For example, if a source application, a source function, and a specific field that are for a message have corresponding importance levels, the sum of importance level determining results is selected. That is, if one of the results is non-unimportant, final result is non-unimportant. For example, a message is unimportant based on a source application of the message, and is unimportant based on a source function of the message, but the message is determined as non-unimportant based on a field ongoing included in the message.

**Table 1**

| Source application or source function | Importance level |
|---|---|
| Amazon | Unimportant |
| Taobao | Unimportant |
| Facebook | Unimportant |
| Twitter | Unimportant |
| WeChat | Non-unimportant |
| Google | Unimportant |
| Sina | Unimportant |
| Low battery level notification | Non-unimportant |
| System update | Unimportant |

**Table 2**

| Message source | Message type | Importance level |
|---|---|---|
| Taobao | Shopping advertising | Unimportant |
| Taobao | Shopping logistics | Non-unimportant |
| Taobao | Payment info | Non-unimportant |
| Nike | Shopping advertising | Non-unimportant |
| Nike | Shopping logistics | Non-unimportant |
| Nike | Payment info | Non-unimportant |

**Table 3**

| Message type | Importance level |
|---|---|
| Shopping advertising | Unimportant |
| Shopping logistics | Non-unimportant |
| Payment info | Non-unimportant |

**Table 4**

| Field in a message | Importance level |
|---|---|
| On sale | Unimportant |
| Cheap | Unimportant |
| 50% off | Unimportant |

A criteria for determining the message B is the same as that for the message A. For a condition for not displaying, regardless of whether the message B meets condition 1, the message B meets condition 2 and does not meet condition 3, and therefore the message B needs to be displayed.

### S7. Display the message A and the message B.

Based on the foregoing determining, if it is determined that the message A is a non-unimportant unread message, the message A and the message B are displayed.

### S8. Display the message B instead of the message A.

Based on the foregoing determining, if it is determined that the message A is an unimportant unread message, the message A is not displayed, and only the message B is displayed.

By performing step S1 to step S8, if a mobile phone of Mr./Ms. Liu receives a large number of unimportant unread messages, Mr./Ms. Liu can perform a very simple operation step, to be specific, closing and re-opening the drop-down message notification bar, to avoid displaying of a large number of unimportant unread messages with no need to perform distinguishment one by one. This saves time and energy, and also avoids missing of some important messages, thereby avoiding large or small losses as many as possible.

An embodiment of this application further provides a message processing apparatus 400. FIG. 2-4 shows a message processing apparatus 400. The message processing apparatus 400 includes a receiving module 401 and a display module 402.

The receiving module 401 is configured to receive a first operation performed by a user on the apparatus; and the display module 402 may display a first unread message and a second unread message on a first user interface of the apparatus based on the first operation. The first user interface is a drop-down message notification bar or a HiBoard. The receiving module 401 is further configured to receive a second operation performed by the user on the apparatus; and after the first user interface is exited, if the first unread message and the second unread message are still unread messages, the display module 402 may further stop displaying the second unread message and maintain displaying of the first unread message on a second user interface. The first unread message is a non-unimportant unread message, and the second unread message is an unimportant unread message. **If** the first user interface is not exited, when the first unread message and the second unread message are still unread messages, the display module 402 further stops displaying the second unread message, and maintains displaying of the first unread message, on the first user interface. The first unread message is a non-unimportant unread message, and the second unread message is an unimportant unread message.

The second operation may be shaking the apparatus by a preset amplitude, for a preset quantity of times, or for preset duration; tapping a preset virtual button on the apparatus; or sending preset audio information to the apparatus.

In this embodiment of this application, FIG. 2-5 shows an apparatus. The apparatus 400 further includes a determining module 403, configured to: determine that the first unread message is the unimportant unread message, and determine that the second unread message is the unimportant unread message. Specifically, that the first unread message is the non-unimportant unread message may be determined based on at least one of: a source function of the first unread message, a source application of the first unread message, or whether the first unread message includes a preset field.

In some feasible embodiments, the determining module 403 may further determine, based on at least one of: a source function of the second unread message, a source application of second unread message, or whether the second unread message includes a preset field, that the second unread message is the unimportant unread message.

In some feasible embodiments, the determining module 403 may further determine that the second operation occurs after preset duration that elapses after the first user interface is exited.

In some feasible embodiments, the apparatus 400 may be a terminal, or may be a chip. This is not limited herein.

An embodiment of this application further provides an apparatus. The apparatus includes a touchscreen, a memory, one or more processors, a plurality of application programs, and one or more programs. The one or more programs are stored in the memory. The apparatus is configured to perform the following steps:
including a first operation performed by a user on the apparatus, where the first operation performed by the user on the apparatus may be turning on a screen, performing tap to open a first user interface, or performing another operation so that the apparatus displays a first user interface, and this is not limited herein; and the first user interface is a drop-down message notification bar or a HiBoard; and in response to the first operation, displaying, by the apparatus, a first unread message and a second unread message on the first user interface, where the apparatus may receive a plurality of messages, and the first unread message and the second unread message are used as an example for description.

In some feasible embodiments, the apparatus 400 may be a terminal, or may be a chip. This is not limited herein.

After the first user interface is exited, the user performs a second operation on the apparatus. Similarly, the second operation may also be turning on the screen, performing tap to open a second user interface, or performing another operation so that the apparatus displays a second user interface, and this is not limited herein. The second user interface is a drop-down message notification bar or a HiBoard. If the first unread message and the second unread message are not read or deleted by the user through tapping and are still unread messages, the first unread message is a non-unimportant unread message, and the second unread message is an unimportant unread message, the apparatus displays the first unread message instead of the second unread message on the second user interface.

Alternatively, when the first user interface is exited, in response to a second operation performed by the user on the apparatus, if the first unread message and the second unread message are still unread messages, displaying the second unread message is stopped, and displaying of the first unread message is maintained, on the first user interface of the apparatus. The first unread message is a non-unimportant unread message, and the second unread message is an unimportant unread message.

Specifically, the second operation is at least one of: shaking the apparatus by a preset amplitude, for a preset quantity of times, or for preset duration; tapping a preset virtual button on the apparatus; or sending preset audio information to the apparatus.

In the technical solution provided in this embodiment of this application, after the first operation and the second operation, the apparatus may not display a displayed unimportant unread message on the second user interface. Therefore, even if when there are a large quantity of unread messages, in order neither to miss non-unimportant unread messages nor to be interfered by unimportant unread messages, the user does not need to identify or delete the unimportant unread messages one by one. This saves time and energy, and ensures great convenience and good user experience.

An embodiment of this application further provides an apparatus. The apparatus includes a touchscreen, a memory, one or more processors, a plurality of application programs, and one or more programs. The one or more programs are stored in the memory. The apparatus is configured to perform the following steps:
including a first operation performed by a user on the apparatus, where the first operation performed by the user on the apparatus may be turning on a screen, performing tap to open a first user interface, or performing another operation so that the apparatus displays a first user interface, and this is not limited herein; and the first user interface is a drop-down message notification bar or a HiBoard; and in response to the first operation, displaying, by the apparatus, a first unread message and a second unread message on the first user interface, where the apparatus may receive a plurality of messages, and the first unread message and the second unread message are used as an example for description; and
after the first user interface is exited, performing, by the user, a second operation on the apparatus, where similarly, the second operation may also be turning on the screen, performing tap to open a second user interface, or performing another operation so that the apparatus displays a second user interface, and this is not limited herein; and the second user interface is a drop-down message notification bar or a HiBoard; and if the first unread message and the second unread message are not read or deleted by the user through tapping and are still unread messages, the first unread message is a non-unimportant unread message, and the second unread message is an unimportant unread message, displaying, by the apparatus, the first unread message instead of the second unread message on the second user interface.

Alternatively, when the first user interface is not exited, in response to a second operation performed by the user on the apparatus, if the first unread message and the second unread message are still unread messages, displaying of the second unread message is stopped, and displaying of the first unread message is maintained, on the first user interface of the apparatus. The first unread message is a non-unimportant unread message, and the second unread message is an unimportant unread message. Specifically, the second operation is at least one of: shaking the apparatus by a preset amplitude, for a preset quantity of times, or for preset duration; tapping a preset virtual button on the apparatus; or sending preset audio information to the apparatus.

**In** the technical solution provided in this embodiment of this application, after the first operation and the second operation, the apparatus may not display a displayed unimportant unread message on the second user interface. Therefore, even if when there are a large quantity of unread messages, in order neither to miss non-unimportant unread messages nor to be interfered by unimportant unread messages, the user does not need to identify or delete the unimportant unread messages one by one. This saves time and energy, and ensures great convenience and good user experience.

The at least one processor executes the several instructions to enable the apparatus to further perform the following step:
determining, based on at least one of: a source function of the first unread message, a source application of the first unread message, or whether the first unread message includes a preset field, that the first unread message is the non-unimportant unread message; and determining, based on at least one of: a source function of the second unread message, a source application of the second unread message, or whether the second unread message includes a preset field, that the second unread message is the unimportant unread message. **In** this case, when there are a large quantity of unread messages, the apparatus can automatically identify unimportant unread messages, and the user does not need to determine the messages one by one. This saves time and energy, and ensures great convenience and good user experience.

The at least one processor executes the several instructions to enable the apparatus to further perform the following step:
Before the response to, after the first user interface is exited, a second operation performed by the user on the apparatus, it may be further determined that the second operation occurs after preset duration that elapses after the first user interface is exited. In this case, the user can consider and determine, within the preset duration, whether an unimportant unread message needs to be read.

All or some of the foregoing embodiments may be implemented by using software, hardware, firmware, or any combination thereof. When implemented by using software, all or some of the foregoing embodiments may be implemented in a form of a computer program product.

The computer program product includes one or more computer instructions. When the computer program instructions are loaded and executed on a computer, all or some of the procedures or functions described in the embodiments of this application are generated. The computer may be a general-purpose computer, a special-purpose computer, a computer network, or another programmable apparatus. The computer instructions may be stored in a computer readable storage medium, or may be transmitted from one computer readable storage medium to another computer readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium that can be stored by the computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state drive (Solid State Disk, SSD)), or the like.

## Claims

1. A message processing method, comprising:
in response to a first operation performed by a user on a terminal, displaying (101) a first unread message and a second unread message on a first user interface of the terminal, wherein the first user interface is a drop-down message notification bar; and
after the first user interface is exited, in response to a second operation performed by the user on the terminal, if the first unread message and the second unread message are still unread messages, the terminal
displays (102) the first unread message on a second user interface; and
does not display the second unread message on the second user interface without user interference, wherein the first unread message is a non-unimportant unread message, the second unread message is an unimportant unread message, and the second user interface is a drop-down message notification bar;
wherein after the first user interface is exited, and before the response to the second operation performed by the user on the terminal, the method further comprises:
determining that the second operation occurs after a preset duration that elapses after the first user interface is exited; and
before the displaying (102) the first unread message instead of the second unread message on a second user interface of the terminal, further comprising:
determining that the first unread message is the non-unimportant unread message, and determining that the second unread message is the unimportant unread message;
wherein the determining that the first unread message is the non-unimportant unread message is specifically:
determining, based on at least one of: a source function of the first unread message or a source application of the first unread message, that the first unread message is the non-unimportant unread message;
and/or
wherein the determining that the second unread message is the unimportant unread message is specifically:
determining, based on at least one of: a source function of the second unread message or a source application of the second unread message, that the second unread message is the unimportant unread message.

2. A message processing apparatus (400), comprising:
a receiving module (401), configured to receive a first operation performed by a user on the apparatus(400); and
a display module (402), configured to display a first unread message and a second unread message on a first user interface of the apparatus (400) based on the first operation, wherein the first user interface is a drop-down message notification bar; wherein
the receiving module (401) is further configured to: after the first user interface is exited, receive a second operation performed by the user on the apparatus (400);
the display module (402) is further configured to: if the first unread message and the second unread message are still unread messages, the display module (402) automatically avoids display the second unread message on a second user interface of the apparatus (400), wherein the first unread message is a non-unimportant unread message, the second unread message is an unimportant unread message, and the second user interface is a drop-down message notification bar;
wherein the determining module (403) is further configured to:
determine that the second operation occurs after preset duration that elapses after the first user interface is exited; and wherein the apparatus (400) further comprises:
a determining module (403), configured to: determine that the first unread message is the non-unimportant unread message, and determine that the second unread message is the unimportant unread message;
wherein the determining module (403) is specifically configured to:
determine, based on at least one of: a source function of the first unread message, a source application of the first unread message, that the first unread message is the non-unimportant unread message;
and/or
determine, based on at least one of: a source function of the second unread message, a source application of the second unread message, that the second unread message is the unimportant unread message.

3. The apparatus (400) according to claim 2, wherein the apparatus (400) is a mobile terminal.

4. The message processing apparatus of claim 2, comprising a touchscreen, a memory, one or more processors, a plurality of application programs, and one or more programs, wherein the one or more programs are stored in the memory.

5. A computer program product, wherein when the computer program product is run on a verification device, the verification device is enabled to perform the method according to claim 1.

## Patentansprüche

1. Nachrichtenverarbeitungsverfahren, umfassend:
als Reaktion auf eine erste von einem Benutzer auf einem Endgerät ausgeführte Operation, Anzeigen (101) einer ersten ungelesenen Nachricht und einer zweiten ungelesenen Nachricht auf einer ersten Benutzeroberfläche des Endgeräts, wobei die erste Benutzeroberfläche eine Dropdown-Benachrichtigungsleiste für Nachrichten ist; und
nach dem Verlassen der ersten Benutzeroberfläche als Reaktion auf eine zweite vom Benutzer auf dem Endgerät ausgeführte Operation, sofern die erste ungelesene Nachricht und die zweite ungelesene Nachricht immer noch ungelesene Nachrichten sind, das Endgerät
die erste ungelesene Nachricht auf einer zweiten Benutzeroberfläche anzeigt (102); und
ohne Benutzereingriff die zweite ungelesene Nachricht nicht auf der zweiten Benutzeroberfläche anzeigt, wobei die erste ungelesene Nachricht eine nicht unwichtige ungelesene Nachricht ist, die zweite ungelesene Nachricht eine unwichtige ungelesene Nachricht ist und die zweite Benutzeroberfläche eine Dropdown-Benachrichtigungsleiste für Nachrichten ist;
wobei nach dem Verlassen der ersten Benutzeroberfläche und vor der Reaktion auf die zweite vom Benutzer am Endgerät ausgeführte Operation das Verfahren ferner umfasst:
Bestimmen, dass die zweite Operation nach einer voreingestellten Zeitspanne erfolgt, die nach dem Verlassen der ersten Benutzeroberfläche verstrichen ist; und
vor dem Anzeigen (102) der ersten ungelesenen Nachricht anstelle der zweiten ungelesenen Nachricht auf einer zweiten Benutzeroberfläche des Endgeräts, ferner umfasst:
Bestimmen, dass die erste ungelesene Nachricht die nicht unwichtige ungelesene Nachricht ist, und Bestimmen, dass die zweite ungelesene Nachricht die unwichtige ungelesene Nachricht ist;
wobei das Bestimmen, dass die erste ungelesene Nachricht die nicht unwichtige ungelesene Nachricht ist, insbesondere umfasst:
Bestimmen, basierend auf mindestens einer der Folgenden: einer Quellfunktion der ersten ungelesenen Nachricht oder einer Quellanwendung der ersten ungelesenen Nachricht, dass die erste ungelesene Nachricht die nicht unwichtige ungelesene Nachricht ist;
und/oder
wobei das Bestimmen, dass die zweite ungelesene Nachricht die unwichtige ungelesene Nachricht ist, insbesondere umfasst:
Bestimmen, basierend auf mindestens einer der Folgenden: einer Quellfunktion der zweiten ungelesenen Nachricht oder einer Quellanwendung der zweiten ungelesenen Nachricht, dass die zweite ungelesene Nachricht die unwichtige ungelesene Nachricht ist.

2. Nachrichtenverarbeitungsvorrichtung (400), umfassend:
ein Empfangsmodul (401), das konfiguriert ist, um eine erste von einem Benutzer auf der Vorrichtung (400) ausgeführte Operation zu empfangen; und
ein Anzeigemodul (402), das konfiguriert ist, um eine erste ungelesene Nachricht und eine zweite ungelesene Nachricht auf einer ersten Benutzeroberfläche der Vorrichtung (400) basierend auf der ersten Operation anzuzeigen, wobei die erste Benutzeroberfläche eine Dropdown-Benachrichtigungsleiste für Nachrichten ist;
wobei
das Empfangsmodul (401) ferner konfiguriert ist, um: nach dem Verlassen der ersten Benutzeroberfläche eine zweite vom Benutzer auf der Vorrichtung (400) ausgeführte Operation zu empfangen;
das Anzeigemodul (402) ferner konfiguriert ist, um: wenn die erste ungelesene Nachricht und die zweite ungelesene Nachricht noch ungelesene Nachrichten sind, das Anzeigemodul (402) automatisch vermeidet, die zweite ungelesene Nachricht auf einer zweiten Benutzeroberfläche der Vorrichtung (400) anzuzeigen, wobei die erste ungelesene Nachricht eine nicht unwichtige ungelesene Nachricht ist, die zweite ungelesene Nachricht eine unwichtige ungelesene Nachricht ist und die zweite Benutzeroberfläche eine Dropdown-Benachrichtigungsleiste für Nachrichten ist;
wobei das Bestimmungsmodul (403) ferner konfiguriert ist, um:
zu bestimmen, dass die zweite Operation nach einer voreingestellten Zeitspanne erfolgt, die nach dem Verlassen der ersten Benutzeroberfläche verstrichen ist; und
wobei die Vorrichtung (400) ferner umfasst:
ein Bestimmungsmodul (403), das konfiguriert ist, um: zu bestimmen, dass die erste ungelesene Nachricht die nicht unwichtige ungelesene Nachricht ist, und zu bestimmen, dass die zweite ungelesene Nachricht die unwichtige ungelesene Nachricht ist;
wobei das Bestimmungsmodul (403) insbesondere konfiguriert ist, um:
zu bestimmen, basierend auf mindestens einer der Folgenden: einer Quellfunktion der ersten ungelesenen Nachricht, einer Quellanwendung der ersten ungelesenen Nachricht, dass die erste ungelesene Nachricht die nicht unwichtige ungelesene Nachricht ist;
und/oder
zu bestimmen, basierend auf mindestens einer der Folgenden: einer Quellfunktion der zweiten ungelesenen Nachricht, einer Quellanwendung der zweiten ungelesenen Nachricht, dass die zweite ungelesene Nachricht die unwichtige ungelesene Nachricht ist.

3. Vorrichtung (400) nach Anspruch 2, wobei die Vorrichtung (400) ein mobiles Endgerät ist.

4. Nachrichtenverarbeitungsvorrichtung nach Anspruch 2, die einen Touchscreen, einen Speicher, einen oder mehrere Prozessoren, eine Vielzahl von Anwendungsprogrammen und ein oder mehrere Programme umfasst, wobei das eine oder die mehreren Programme im Speicher gespeichert sind.

5. Computerprogrammprodukt, wobei, wenn das Computerprogrammprodukt auf einem Verifizierungsgerät ausgeführt wird, das Verifizierungsgerät aktiviert wird, um das Verfahren gemäß Anspruch 1 durchzuführen.

## Revendications

1. Procédé de traitement de message, comprenant l'étape consistant à :
en réponse à une première opération effectuée par un utilisateur sur un terminal, afficher (101) un premier message non lu et un deuxième message non lu sur une première interface utilisateur du terminal, la première interface utilisateur étant une barre de notification de messages déroulante ; et
après que la première interface utilisateur a été quittée, en réponse à une deuxième opération effectuée par l'utilisateur sur le terminal, si le premier message non lu et le deuxième message non lu sont toujours des messages non lus, le terminal affiche (102) le premier message non lu sur une deuxième interface utilisateur ; et
n'affiche pas le deuxième message non lu sur la deuxième interface utilisateur sans intervention de l'utilisateur, le premier message non lu étant un message non lu qui n'est pas sans importance, le deuxième message non lu étant un message non lu sans importance, et la deuxième interface utilisateur étant une barre de notification de messages déroulante ;
le procédé, après que la première interface utilisateur a été quittée, et avant la réponse à la deuxième opération effectuée par l'utilisateur sur le terminal, comprenant également l'étape consistant à :
déterminer que la deuxième opération se produit après une durée prédéfinie qui s'écoule après que la première interface utilisateur a été quittée ; et
comprenant également, avant l'affichage (102) du premier message non lu au lieu du deuxième message non lu sur une deuxième interface utilisateur du terminal, l'étape consistant à :
déterminer que le premier message non lu est le message non lu qui n'est pas sans importance, et déterminer que le deuxième message non lu est le message non lu sans importance ;
la détermination du fait que le premier message non lu est le message non lu qui n'est pas sans importance consistant spécifiquement à :
déterminer, sur la base d'au moins un élément parmi : une fonction source du premier message non lu ou une application source du premier message non lu, que le premier message non lu est le message non lu qui n'est pas sans importance ;
et/ou
la détermination du fait que le deuxième message non lu est le message non lu sans importance consistant spécifiquement à :
déterminer, sur la base d'au moins un élément parmi : une fonction source du deuxième message non lu ou une application source du deuxième message non lu,
que le deuxième message non lu est le message non lu sans importance.

2. Appareil de traitement de message (400), comprenant :
un module de réception (401), configuré pour recevoir une première opération effectuée par un utilisateur sur l'appareil (400) ; et
un module d'affichage (402), configuré pour afficher un premier message non lu et un deuxième message non lu sur une première interface utilisateur de l'appareil (400) sur la base de la première opération, la première interface utilisateur étant une barre de notification de messages déroulante ;
le module de réception (401) étant également configuré pour : après que la première interface utilisateur a été quittée, recevoir une deuxième opération effectuée par l'utilisateur sur l'appareil (400) ;
le module d'affichage (402) étant également configuré pour : si le premier message non lu et le deuxième message non lu sont toujours des messages non lus, le module d'affichage (402) s'abstient automatiquement d'afficher le deuxième message non lu sur une deuxième interface utilisateur de l'appareil (400), le premier message non lu étant un message non lu qui n'est pas sans importance, le deuxième message non lu étant un message non lu sans importance, et la deuxième interface utilisateur étant une barre de notification de messages déroulante ;
le module de détermination (403) étant également configuré pour :
déterminer que la deuxième opération se produit après une durée prédéfinie qui s'écoule après que la première interface utilisateur a été quittée ; et
l'appareil (400) comprenant également :
un module de détermination (403), configuré pour : déterminer que le premier message non lu est le message non lu qui n'est pas sans importance, et déterminer que le deuxième message non lu est le message non lu sans importance ;
le module de détermination (403) étant spécifiquement configuré pour :
déterminer, sur la base d'au moins un élément parmi : une fonction source du premier message non lu, une application source du premier message non lu, que le premier message non lu est le message non lu qui n'est pas sans importance ;
et/ou
déterminer, sur la base d'au moins un élément parmi : une fonction source du deuxième message non lu, une application source du deuxième message non lu, que le deuxième message non lu est le message non lu sans importance.

3. Appareil (400) selon la revendication 2, l'appareil (400) étant un terminal mobile.

4. Appareil de traitement de message selon la revendication 2, comprenant un écran tactile, une mémoire, un ou plusieurs processeurs, une pluralité de programmes d'application, et un ou plusieurs programmes, les un ou plusieurs programmes étant stockés dans la mémoire.

5. Produit-programme informatique, tel que lorsque le produit-programme informatique est exécuté sur un dispositif de vérification, le dispositif de vérification est activé pour réaliser le procédé selon la revendication 1.
